(19) Europäisches Patentamt
European Patent Office
Office européen des brevets

(11) **EP 4 561 221 A1**

(12) **EUROPEAN PATENT APPLICATION**
published in accordance with Art. 153(4) EPC

(43) Date of publication:
**28.05.2025 Bulletin 2025/22**

(21) Application number: **23842260.4**

(22) Date of filing: **17.07.2023**

(51) International Patent Classification (IPC):
**H04W 72/04** (2023.01)

(52) Cooperative Patent Classification (CPC):
**H04W 72/04; H04W 72/0446; H04W 72/0453; H04W 72/1268; H04W 72/1273; H04W 72/21; H04W 72/23; H04W 72/231; H04W 72/232; H04W 72/566**

(86) International application number:
**PCT/CN2023/107715**

(87) International publication number:
**WO 2024/017197 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.07.2022 CN 202210873501**

(71) Applicant: **Vivo Mobile Communication Co., Ltd.
Dongguan, Guangdong 523863 (CN)**

(72) Inventors:
• **ZENG, Chaojun**
**Dongguan, Guangdong 523863 (CN)**
• **WANG, Lihui**
**Dongguan, Guangdong 523863 (CN)**
• **PAN, Xueming**
**Dongguan, Guangdong 523863 (CN)**

(74) Representative: **Conti, Marco**
**Bugnion S.p.A.**
**Via di Corticella, 87**
**40128 Bologna (IT)**

(54) **TRANSMISSION PROCESSING METHOD AND APPARATUS, AND DEVICE**

(57) This application discloses a transmission processing method and apparatus, and a device, and relates to the field of communication. The method in the embodiments of this application includes: determining, by a first device according to resource configuration information, a first time-frequency resource for a first physical channel transmission; and performing, by the first device, the first physical channel transmission according to whether a resource element RE in the first time-frequency resource is valid.

FIG. 2

## Description

## CROSS-REFERENCE TO RELATED APPLICATIONS

This application claims priority to Chinese Patent Application No. 202210873501.5 filed on July 21, 2022, which is incorporated herein by reference in its entirety.

## TECHNICAL FIELD

This application relates to the field of communication technologies, and specifically, to a transmission processing method and apparatus, and a device.

## BACKGROUND

In the related communication technologies, to utilize limited spectrum resources more flexibly, so as to dynamically match a service requirement and improve resource utilization efficiency and performance such as uplink coverage and delay of a data transmission, a flexible duplex mode is provided. The flexible duplex mode (non-overlapping Sub-Band Full Duplex, SBFD) is: full-duplex at a network side, that is, at the same moment, an uplink transmission and a downlink transmission may be performed simultaneously at different frequency domain locations, to avoid interference between the uplink transmission and the downlink transmission, and a specific guard band (Guard Band) may be reserved between frequency domain locations corresponding to different transmission directions (corresponding to duplex sub-bands); and half-duplex at a terminal side, that is, consistent with time division duplex (Time Division Duplex, TDD), namely, at the same moment, only an uplink transmission or a downlink transmission can be performed, and the uplink transmission and the downlink transmission cannot be performed simultaneously. It may be understood that, in this duplex mode, an uplink transmission and a downlink transmission at the same moment on the network side can be performed only for different terminals.

In the foregoing flexible duplex mode, how to transmit based on uplink or downlink resources with different attributes in an SBFD carrier has become a problem to be urgently resolved.

## SUMMARY

Embodiments of this application provide a transmission processing method and apparatus, and a device, so that a transmission in a flexible duplex mode can be implemented.

According to a first aspect, a transmission processing method is provided, including:

　　determining, by a first device according to resource configuration information, a first time-frequency resource for a first physical channel transmission; and performing, by the first device, the first physical channel transmission according to whether a resource element RE in the first time-frequency resource is valid.

According to a second aspect, a transmission processing apparatus is provided, including:

　　a first processing module, configured to determine, according to resource configuration information, a first time-frequency resource for a first physical channel transmission; and
　　a second processing module, configured to perform the first physical channel transmission according to whether a resource element RE in the first time-frequency resource is valid.

According to a third aspect, a communication device is provided, including a processor and a memory, where the memory stores a program or an instruction executable on the processor, and when the program or the instruction is executed by the processor, the steps of the method according to the first aspect are implemented.

According to a fourth aspect, a communication device is provided, including a processor and a communication interface, where the processor is configured to:

　　determine, according to resource configuration information, a first time-frequency resource for a first physical channel transmission; and
　　perform the first physical channel transmission according to whether a resource element RE in the first time-frequency resource is valid.

According to a fifth aspect, a communication system is provided, including a terminal and a network side device, where the terminal may be configured to perform the steps of the transmission processing method according to the first aspect, and the network side device may be configured to perform the steps of the transmission processing method according to the first aspect.

According to a sixth aspect, a readable storage medium is provided, having a program or an instruction stored therein, where when the program or the instruction is executed by a processor, the steps of the transmission processing method according to the first aspect are implemented.

According to a seventh aspect, a chip is provided, including a processor and a communication interface, where the communication interface is coupled to the processor, and the processor is configured to execute a program or an instruction, to implement the transmission processing method according to the first aspect.

According to an eighth aspect, a computer program/program product is provided, where the computer program/program product is stored in a storage medium, and when the computer program/program product is executed by at least one processor, the steps of the transmission processing method according to the first aspect are implemented.

In the embodiments of this application, after the first time-frequency resource transmitted on the first physical channel is determined according to the resource configuration information, the first physical channel transmission is further performed based on whether the RE in the first time-frequency resource is valid, to implement a transmission in the flexible duplex mode, thereby ensuring a transmission opportunity on a PUSCH/PDSCH and transmission performance.

## BRIEF DESCRIPTION OF THE DRAWINGS

FIG. 1 is a block diagram of a wireless communication system;

FIG. 2 is a schematic flowchart of a transmission processing method according to an embodiment of this application;

FIG. 3 is a schematic structural diagram of a transmission processing apparatus according to an embodiment of this application;

FIG. 4 is a schematic structural diagram of a communication device according to an embodiment of this application;

FIG. 5 is a schematic structural diagram of a terminal according to an embodiment of this application;

FIG. 6 is a schematic structural diagram of a network side device according to an embodiment of this application; and

FIG. 7 is a schematic diagram of a flexible duplex mode.

## DETAILED DESCRIPTION

The technical solutions in embodiments of this application are clearly described below with reference to the accompanying drawings in the embodiments of this application. Apparently, the described embodiments are merely some rather than all of the embodiments of this application. All other embodiments obtained by a person of ordinary skill in the art based on the embodiments of this application fall within the protection scope of this application.

In the specification and the claims of this application, the terms "first" and "second" are used to distinguish similar objects, but are not used to describe a specific sequence or order. It should be understood that the terms used in this way are interchangeable in proper circumstances, so that the embodiments of this application can be implemented in another sequence other than those illustrated or described herein. In addition, the objects distinguished by "first" and "second" generally belong to the same type and a number of the objects is not limited. For example, there may be one or more first objects. In addition, in the specification and the claims, "and/or" indicates at least one of connected objects, and the character "/" generally indicates an "or" relationship between associated objects.

It should be noted that technologies described in the embodiments of this application are not limited to a long term evolution (Long Term Evolution, LTE)/LTE-advanced (LTE-Advanced, LTE-A) system, and may be further applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. Terms "system" and "network" in the embodiments of this application may usually be used interchangeably. The described technology may be applied to the foregoing mentioned systems and radio technologies, and may also be applied to other systems and radio technologies. The following describes a new radio (New Radio, NR) system for an exemplary purpose, and NR terms are used in most of the description below. These technologies may also be applied to an application other than an NR system application, such as a 6th generation (6th Generation, 6G) communication system.

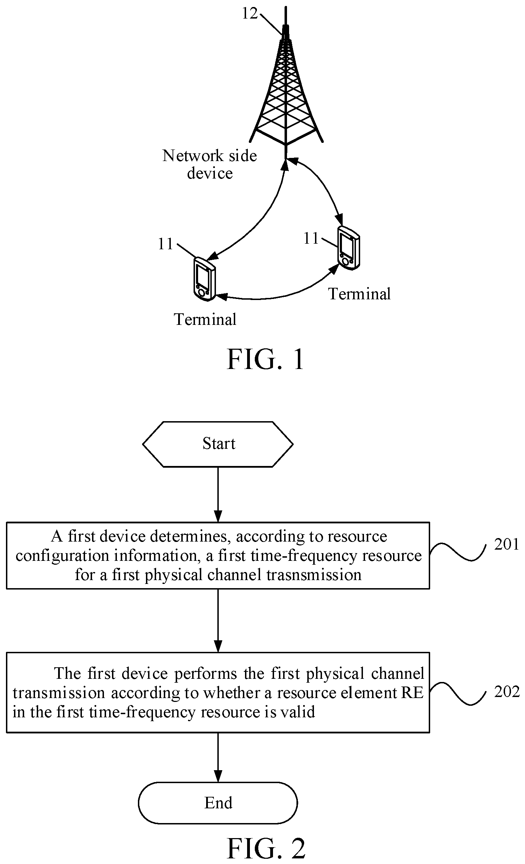

FIG. 1 is a block diagram of a wireless communication system to which an embodiment of this application is applicable. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (home devices with a wireless communication function, such as a refrigerator, a television, a washing machine, a furniture, or the like), a game console, a personal computer (personal computer, PC), a teller machine, or a self-service machine. The wearable device includes a smart watch, a smart band, a smart headset, smart glasses, a smart jewelry (a smart bangle, a smart bracelet, a smart ring, a smart necklace, a smart anklet, or a smart anklet bracelet), a smart wristlet, a smart clothes, or the like. It should be noted that, a specific type of the terminal 11 is not limited in the embodiments of this application. The network side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point or a WiFi node, or the like. The base station may be referred to as a NodeB, an evolved NodeB (evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting and receiving point (Transmitting Receiving Point, TRP), or another appropriate term in the field, and provided that the same technical effect can be achieved, the base station is not limited to a specific technical term. It should be noted that, a base station in an NR system is only used as an example in the embodiments of this application, and a specific type of the base station is not limited. The core network device may include but not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (local NEF, L-NEF), a binding support function (Binding Support Function, BSF), an application function (Application Function, AF), or the like. It should be noted that, a core network device in an NR system is only used as an example in the embodiments of this application, and a specific type of the core network device is not limited.

For ease of understanding, the following describes some content involved in the embodiments of this application:

1. TDD mode (pattern)

When an NR cell is deployed in an asymmetric spectrum, a TDD duplex mode is generally used. In this case, a TDD uplink/downlink common configuration (TDD-UL-DL-ConfigCommon) may be configured in a public parameter of the cell, to indicate TDD frame structure information. The TDD frame structure information includes a TDD frame period, a quantity of complete downlink/uplink slots (Slot) included in a single frame period, a quantity of downlink/uplink symbols (Symbol) additionally included other than the complete downlink/uplink Slots, and the like. Optionally, a TDD uplink/downlink dedicated configuration (TDD-UL-DL-Config-Dedicated) may also be independently configured for each user equipment (User Equipment, UE) through radio resource control (Radio Resource Control, RRC) signaling, to further modify an uplink/downlink symbol (Symbol) configuration of one or more Slots in a single frame period based on TDD-UL-DL-ConfigCommon. That is, an initial value of the uplink/downlink Symbol configuration of the Slot is specified by TDD-UL-DL-ConfigCommon and then further modified by TDD-UL-DL-ConfigDedicated, and the modification is only applied to the UE receiving the RRC signaling. In addition, the modification herein is only limited to further indicating a flexible symbol (Flexible symbol) in the Slot as a DL/UL symbol, and cannot modify a DL/UL symbol in the Slot into another direction. A transmission direction of the flexible symbol is not clear, and whether the flexible symbol is used for a downlink transmission or an uplink transmission may be subsequently determined as required.

The foregoing TDD-UL-DL-ConfigCommon and/or TDD-UL-DL-ConfigDedicated are optional configurations, and since the configuration information can only be semi-statically configured/modified based on signaling at an RRC layer, each symbol (in combination with a transmission direction configured for the symbol) in a single TDD frame period determined through the configuration information is referred to as a semi-static downlink symbol/semi-static uplink symbol/semi-static flexible symbol (Semi-static DL/UL/flexible symbol) below. The symbol may be further extended into a time domain unit, where the time domain unit may correspond to a slot (Slot), a symbol (Symbol), or the like, and the single TDD frame period may include a plurality of Semi-static DL/UL/flexible time domain units based on the configuration information.

When the foregoing TDD-UL-DL-ConfigCommon and TDD-UL-DL-ConfigDedicated are not configured, a clear concept of the TDD frame period does not exist. In this case, each Slot/Symbol in each radio frame in the NR cell may be understood as a Semi-static flexible slot/symbol, or a Semi-static flexible time domain unit.

2. Configured grant (Configured Grant, CG)/Semi-persistent scheduling (Semi-persistent Scheduling, SPS) transmission

The CG/SPS transmission is mainly used for carrying data of a periodic service. A period is relatively stable, and a data amount that is reached/needs to be transmitted in each period is relatively fixed or only fluctuates in a relatively small range.

In NR, it is allowed to configure one or more CG Config/SPS Config for a single uplink/downlink bandwidth part (UL/DL BWP) of single UE, where each CG Config/SPS Config may correspond to an independently configured period/offset, a time-frequency resource, or the like, and an independent transmission occasion (Occasion) (a time domain location thereof is determined based on the period/offset).

For the CG Config, 12 CG Config are allowed to be configured for a single UL BWP of single UE at most, where a period of each CG Config may be a Slot level or a Symbol level (which may be unified into Symbols during configuration), and a minimum value of the period may be 2 Symbols. A CG Config may be further configured as a CG Config type (Type) 1 or a CG Config Type 2. An uplink grant (UpLink grant, UL grant) used by the CG Config Type 1 is directly configured by the RRC, and after RRC configuration, a corresponding Occasion and resource assignment are completely determined based on RRC configuration information. In this case, the UE may initiate a corresponding CG physical uplink shared channel (Physical Uplink Shared Channel, PUSCH) transmission for each Occasion. For the CG Config Type 2, the RRC only configures information other than the UL Grant, and the UL Grant is indicated/activated through activation downlink control information (Downlink Control Information, DCI) and released through releasing DCI. Only after the UL Grant is activated by the activation DCI and before the UL Grant is released by the releasing DCI, the corresponding Occasion and resource assignment take effect. In this case, the UE may initiate a corresponding CG PUSCH transmission for each Occasion.

For the SPS Config, 8 SPS Config are allowed to be configured for a single downlink bandwidth part DL BWP of single UE at most, where a period of each SPS Config may be a Slot level (which may be unified into ms during configuration), and a minimum value of the period may be a duration corresponding to a single Slot. Operations of SPS are similar to operations of the CG Config Type 2: The RRC only configures information other than downlink assignment (Down Link Assignment, DL Assignment), and the DL Assignment is indicated/activated through activation DCI and released through releasing DCI. Only after the DL assignment is activated by the activation DCI and before the DL assignment is released by the releasing DCI, the corresponding Occasion and resource assignment take effect. In this case, the UE may receive a corresponding SPS physical downlink shared channel (Physical Downlink Shared Channel, PDSCH) transmission, and make a corresponding SPS hybrid automatic repeat request acknowledgement (Hybrid Automatic Repeat reQuest ACKnowledgement, HARQ-ACK) feedback.

3. Determination of a transport block (Transmission Block, TB) size (Size) transmitted on an NR shared channel

Two cases are distinguished for determining a quantity of bits of a TB corresponding to a PUSCH carrying the TB:

Case 1: $I_{MCS}$ corresponds to a normal modulation and coding scheme (Modulation and Coding Scheme, MCS) level and indicates a target code rate R.

For dynamic scheduling, $I_{MCS}$ is a value of a "Modulation and coding scheme" field in a DCI Format 0_0/0_1. The "corresponding to a normal MCS level" is that $I_{MCS}$ corresponds to a row where values of a target code rate Rx1024 (Target code Rate Rx1024) column are not reserved and values of a spectral efficiency (spectral efficiency) column are not reserved of an MCS index table 1 Table 5.1.3.1-1 for a PDSCH (MCS index table 1 for PDSCH)/an MCS index table 2 Table 5.1.3.1-2 for a PDSCH (MCS index table 2 for PDSCH)/an MCS index table 3 Table 5.1.3.1-3 for a PDSCH (MCS index table 3 for PDSCH) or an MCS index table 1 Table 6.1.4.1-1 for a PUSCH with transform precoding and 64QAM (MCS index table for PUSCH with transform precoding and 64QAM)/an MCS index table 2 Table 6.1.4.1-2 for a PUSCH with transform precoding and 64QAM (MCS index table 2 for PUSCH with transform precoding and 64QAM) in a protocol, which may clearly indicate the target code rate R in this case.

The UE first determines a quantity ($N_{RE}$) of valid resource elements (Resource Element, RE) of a TB carried on a PUSCH based on the following procedure:

1. A quantity ($N'_{RE}$) of REs used for a PUSCH transmission assigned in a single physical resource block (Physical Resource Block, PRB) is first determined.

$$N'_{RE} = N^{RB}_{sc} \cdot N^{sh}_{symb} - N^{PRB}_{DMRS} - N^{PRB}_{oh},$$

where $N^{RB}_{sc} = 12$ and indicates a quantity of subcarriers in the single PRB; $N^{sh}_{symb}$ is a quantity of symbols occupied by the PUSCH; $N^{PRB}_{DMRS}$ is a quantity of REs used for transmitting a demodulation reference signal (Demodulation Reference Signal, DM-RS) in each PRB; and $N^{PRB}_{oh}$ is overheads of parameter configuration by a high layer, and if the high layer does not configure parameters, it is assumed that $N^{PRB}_{oh} = 0$.

2. A value of ($N_{RE}$) is then determined.

$$N_{RE} = min\left(156, N_{RE}^{'}\right) \cdot n_{PRB}$$

, where $n_{PRB}$ is a quantity of PRBs occupied by the PUSCH.

The UE then determines the quantity of bits of the TB based on ($N_{RE}$) and through operations such as quantify and table lookup on the target code rate R and a modulation order Qm determined according to $I_{MCS}$ (for dynamic scheduling, this is the value of the "Modulation and coding scheme" field in the DCI Format 0_0/0_1) and a quantity $\upsilon$ of layers mapped by the TB.

Case 2: $I_{MCS}$ corresponds to a reserved MCS level and does not indicate a target code rate R.

The "corresponding to a reserved MCS level" is that $I_{MCS}$ corresponds to a row whose value is "reserved" of a "Target code Rate Rx1024 column and a "Spectral efficiency" column of a Table 5.1.3.1-1 (MCS index table 1 for PDSCH)/a Table 5.1.3.1-2 (MCS index table 2 for PDSCH)/a Table 5.1.3.1-3 (MCS index table 3 for PDSCH) or a Table 6.1.4.1-1 (MCS index table for PUSCH with transform precoding and 64QAM)/a Table 6.1.4.1-2 (MCS index table 2 for PUSCH with transform precoding and 64QAM), which does not clearly indicate the target code rate R in this case and only indicates a modulation order Qm to indicate a modulate operation.

In this case, the UE assumes that the TB Size is equal to a TB Size indicated by last DCI scheduling the same TB and using a normal MCS level.

For the CG Config Type *1, $I_{MCS}$,* time domain resource assignment information, frequency domain resource assignment information, and the like are included in the UL Grant configured by the RRC, and for the CG Config Type 2, $I_{MCS}$, the time domain resource assignment information, the frequency domain resource assignment information, and the like are indicated by the activation DCI. Determination of the TB Size is consistent with that in dynamic scheduling.

For downlink dynamic scheduling, determination of the TB Size is consistent with that in uplink dynamic scheduling, and a difference only lines in DCI Formats corresponding to scheduling DCI. For the SPS Config, determination of the TB Size is consistent with that in the CG Config Type 2.

4. Flexible duplex

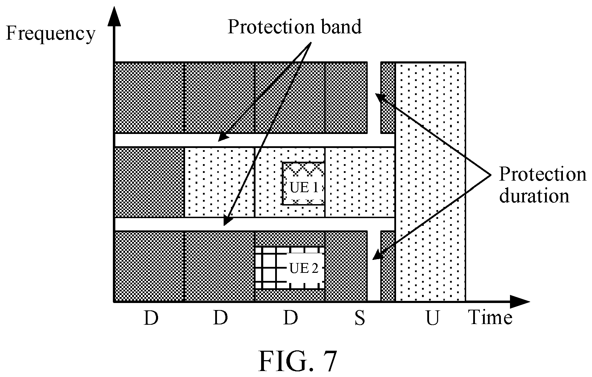

FIG. 7 shows a schematic diagram of a flexible duplex mode. A network side device semi-statically divides a frequency domain of a single carrier into three duplex sub-bands in a part of downlink symbols, where downlink duplex sub-bands are located on two sides of a carrier, and uplink duplex sub-bands are located in the middle, to reduce interference caused by adjacent carriers. In the third slot, UE 1 and UE 2 performs uplink sending and downlink receiving respectively. The following describes in detail the transmission processing method provided in the embodiments of this application with reference to the accompanying drawings and through some embodiments and application scenarios thereof.

As shown in FIG. 2, a transmission processing method according to an embodiment of this application includes:

Step 201. A first device determines, according to resource configuration information, a first time-frequency resource for a first physical channel transmission.

The resource configuration information may be predefined in a specification or configured by another device. The first device can determine, based on the resource configuration information, the first time-frequency resource transmitted on the first physical channel, which helps perform the first physical channel transmission subsequently.

Step 202. The first device performs the first physical channel transmission according to whether a resource element RE in the first time-frequency resource is valid.

The first device determines whether the RE in the first time-frequency resource determined through step 201 is valid, to perform the first physical channel transmission. Determining whether the RE is valid includes: when the RE is located in a Guard Band configured by a network side, or the RE is configured as an opposite direction (which is configured as DL for a PUSCH transmission; and configured as UL for a PDSCH transmission) or Flexible, the RE is invalid; otherwise, the RE is valid.

In this way, according to the method in the embodiments of this application, after the first time-frequency resource transmitted on the first physical channel is determined according to the resource configuration information, the first device further performs the first physical channel transmission based on whether the RE in the first time-frequency resource is valid, to implement a transmission in the flexible duplex mode, thereby ensuring a transmission opportunity on a PUSCH/PDSCH and transmission performance.

It should be noted that, the resource configuration information in this embodiment may be an UL Grant/DL Assignment

It should be further noted that, the first physical channel transmission in this embodiment may be a CG PUSCH transmission corresponding to a CG Config or an SPS PDSCH transmission corresponding to an SPS Config or a dynamic grant (Dynamical Grant, DG) PUSCH/PDSCH transmission scheduled by DCI.

The DG PUSCH/PDSCH transmission scheduled by DCI includes one or more DG PUSCH/PDSCH scheduled by single DCI (that is, the DG PUSCH transmission scheduled by DCI includes one or more DG PUSCH scheduled by single DCI, and the DG PDSCH transmission scheduled by DCI includes one or more DG PDSCH scheduled by single DCI). Each DG PUSCH/PDSCH corresponds to or does not correspond to repetition (Repetition) transmissions; and each PUSCH may occupy only one slot or occupy a plurality of slots, for example, a TB over multiple slots (TB over multiple slots, TBoMS). When the DG PUSCH/PDSCH does not correspond to Repetition transmissions, each DG PUSCH/PDSCH only corresponds to a single DG PUSCH/PDSCH transmission. That is, the DG PUSCH only corresponds to a single DG PUSCH transmission, and the DG PDSCH only corresponds to a single DG PDSCH transmission. When the DG PUSCH/PDSCH corresponds to Repetition transmissions, each DG PUSCH/PDSCH corresponds to a plurality of DG PUSCH/PDSCH transmissions. That is, each DG PUSCH corresponds to a plurality of DG PUSCH transmissions, and each DG PDSCH corresponds to a plurality of DG PDSCH transmissions, where each DG PUSCH/PDSCH transmission corresponds to a single DG PUSCH/PDSCH repetition transmission, namely, each DG PUSCH transmission corresponds to a single DG PUSCH repetition transmission, and each DG PDSCH transmission corresponds to a single DG PDSCH repetition transmission. The PUSCH/PDSCH transmission is a single PUSCH/PDSCH transmission initiated in a single Slot based on a configured/indicated time-frequency resource.

Optionally, for a CG Config/SPS Config, the Occasion may be understood as a transmission opportunity corresponding to a single CG PUSCH/SPS PDSCH determined by the CG Config/SPS Config in time domain based on a configured period, an offset (for the CG Config Type 1), activation DCI (for the CG Config Type 2/SPS Config), and the like. When Repetition transmissions are not configured, each CG PUSCH only corresponds to a single CG PUSCH transmission, or each SPS PDSCH only corresponds to a single SPS PDSCH transmission. When Repetition transmissions are configured, each CG PUSCH corresponds to a plurality of CG PUSCH/SPS PDSCH transmissions, where each CG PUSCH transmission corresponds to a single CG PUSCH repetition transmission; or each SPS PDSCH corresponds to a plurality of SPS PDSCH transmissions, where each SPS PDSCH transmission corresponds to a single SPS PDSCH repetition transmission.

When Repetition transmissions are not configured, for the CG Config Type 1, a time-frequency resource corresponding to an Occasion (a corresponding single CG PUSCH/SPS PDSCH transmission) is determined by an UL Grant configured by higher layer signaling (the UL Grant is configured by rrc-ConfiguredUplink-Grant in a higher layer parameter ConfiguredGrantConfig); and for the CG Config Type 2/SPS Config, a time-frequency resource corresponding to an Occasion is determined by an UL Grant/DL Assignment indicated by (the latest) activation DCI. The time-frequency resource herein mainly focuses on a resource (set) occupied by a CG PUSCH/SPS PDSCH transmission corresponding to an Occasion in time domain and frequency domain based on the UL Grant/DL Assignment. For example, the UL Grant configured by the higher layer signaling is respectively configured by time domain resource assignment (timeDomainAllocation) and frequency domain resource assignment (frequencyDomainAllocation); and the UL Grant/DL Assignment indicated by (the latest) activation DCI are respectively indicated by a time domain resource assignment (Time domain resource assignment) indication field and a frequency domain resource assignment (Frequency domain resource assignment) indication field in the activation DCI.

When Repetition transmissions are configured, each Occasion corresponds to a plurality of Repetition transmissions, and a time-frequency resource corresponding to each Repetition transmission is determined according to the UL Grant/DL Assignment, or is determined according to the UL Grant/DL Assignment and a related rule. For a plurality of CG PUSCH transmissions, each Repetition transmission is in a one-to-one correspondence with each CG PUSCH transmission; or for a plurality of SPS PDSCH transmissions, each Repetition transmission is in a one-to-one correspondence with each SPS PDSCH transmission.

For the DG PUSCH/PDSCH transmission scheduled by DCI, it may be understood that each scheduled DG PUSCH/PDSCH corresponds to a single Occasion, and a corresponding UL Grant/DL assignment thereof is indicated by the DCI. When a DC PUSCH/PDSCH corresponds to Repetition transmissions, a corresponding Occasion also corresponds to a plurality of Repetition transmissions, and for a plurality of PUSCH/PDSCH transmissions, each Repetition transmission is in a one-to-one correspondence with each DG PUSCH/PDSCH transmission.

Optionally, in some embodiments, step 202 includes:

Manner 1. The first device determines that the first physical channel transmission is invalid in a case that at least one invalid RE exists in the first time-frequency resource, or a quantity of invalid REs in the first time-frequency resource is greater than or equal to a first threshold, or a ratio of the invalid REs in the first time-frequency resource is greater than or equal to a second threshold.

That the first physical channel transmission is invalid may also be understood as that the first physical channel transmission is invalid. In this embodiment, if the physical channel transmission is uplink, that the physical channel transmission is unavailable or invalid indicates that the terminal ignores or does not initiate a corresponding physical channel transmission; and if the physical channel transmission is downlink, that the physical channel transmission is unavailable or invalid indicates that the terminal ignores or does not receive a corresponding physical channel transmission.

For example, when a PUSCH transmission is determined as invalid or unavailable, the UE ignores or does not initiate a corresponding PUSCH transmission; and when a PDSCH transmission is determined as invalid or unavailable, the UE ignores or does not receive a corresponding PDSCH transmission.

It should be noted that, the first threshold and the second threshold may be predefined in a specification or configured by higher layer signaling, and may be values greater than or equal to 0. Specifically, the first threshold is an integer; and the second threshold is a floating-point number less than 1.0.

Optionally, the first threshold and the second threshold may be respectively set based on different RE types, for example, to distinguish a DM-RS RE and a data RE. For example, when any DM-RS RE in a time-frequency resource corresponding to a PUSCH/PDSCH transmission is valid and a quantity or a ratio of invalid REs in data REs is less than a corresponding threshold, the PUSCH/PDSCH transmission is valid or available, and the UE may initiate a corresponding PUSCH transmission or receive a corresponding PDSCH transmission.

When at least one RE in the data REs is determined as invalid, the PUSCH/PDSCH transmission may perform puncturing (Puncturing) for the/the at least one invalid RE, namely, perform rate matching (Rate matching) based on the time-frequency resource corresponding to the PUSCH/PDSCH transmission, but an encoded bit to which the invalid RE is mapped is actually not transmitted; or rate matching (Rate matching), that is, keeping away from invalid REs when mapping coded bits. The threshold of the quantity or the ratio of the invalid REs may be controlled to control influence of Puncturing or Rate matching based on the invalid REs on data transceiving performance of a shared channel.

Optionally, in some embodiments, step 202 includes:

> Manner 2. The first device uses an available resource meeting a preset condition as a second time-frequency resource in a case that at least one valid RE exists in the first time-frequency resource, where the available resource is a set or a subset of the at least one valid RE; and
> the first device performs the first physical channel transmission on the second time-frequency resource.

That is, for the case that at least one valid RE exists in the first time-frequency resource, the first device may determine the second time-frequency resource based on the available resource corresponding to the set or the subset formed by the at least one valid RE and according to the preset condition, to perform the first physical channel transmission on the second time-frequency resource.

Optionally, the first physical channel transmission is the PUSCH/PDSCH transmission, when the available resource is determined, if all REs in the time-frequency resource (that is, the first time-frequency resource) corresponding to the PUSCH/PDSCH transmission are valid, the PUSCH/PDSCH transmission has no conflict, which may be understood as that the time-frequency resource corresponding to the PUSCH/PDSCH transmission is used as an available resource, and a corresponding PUSCH/PDSCH transmission is performed based on the UL Grant/DL assignment or based on the UL Grant/DL assignment and the related rule.

Optionally, the first physical channel transmission is performed on all or a part of the second time-frequency resource.

Optionally, the preset condition includes at least one of the following:

> a first condition corresponding to a frequency domain resource;
> a second condition corresponding to a time domain resource; and
> a third condition corresponding to a time-frequency domain resource.

Optionally, in some embodiments, the first condition includes at least one of the following:

> occupied bandwidths are consecutive in frequency domain;
> a quantity of occupied consecutive physical resource blocks PRBs is a third threshold;
> a quantity of occupied PRBs is greater than or equal to a fourth threshold; and
> a ratio of the occupied PRBs to PRBs occupied by the first time-frequency resource is greater than or equal to a fifth threshold.

The third threshold, the fourth threshold, and the fifth threshold may also be predefined in a specification or configured by higher layer signaling.

In this embodiment, when the first condition includes that the occupied bandwidths are consecutive in frequency domain and the available resource is divided into a plurality of locally consecutive frequency domain segments based on distribution of the invalid REs, the second time-frequency resource may be selected based on any one of the following selection rules:

> selecting a frequency domain segment having a maximum quantity of consecutive PRBs; or
> selecting a frequency domain segment carrying a maximum amount of data.

It should be learned that, using that the occupied bandwidths are consecutive in frequency domain as the first condition is applicable to a transmission requiring that occupied bandwidths are consecutive in frequency domain, for example, a transmission adopting a resource assignment type 1. This requirement may not be proposed for a transmission supporting that occupied bandwidths are not consecutive in frequency domain, for example, a transmission supporting in adopting a resource assignment type 0.

in this embodiment, when the first condition includes that the quantity of the occupied consecutive physical resource blocks PRBs is the third threshold, a specific requirement may be proposed for a case that discrete Fourier transform (Discrete Fourier Transform, DFT)-s-orthogonal frequency division multiplex (Orthogonal frequency division multiplex, OFDM) is adopted, and the specific requirement is that the third threshold is equal to $2^{\alpha_2} \cdot 3^{\alpha_3} \cdot 5^{\alpha_5}$, where $\alpha_2, \alpha_3, \alpha_5$ is any nonnegative integer.

Optionally, in some embodiments, the second condition includes at least one of the following:

occupied symbols are consecutive in time domain; the occupied symbols include all or at least N demodulation reference signals DMRSs, where N is an integer greater than or equal to 0; a quantity of the occupied symbols is greater than or equal to a sixth threshold; and a ratio of the occupied symbols to symbols occupied by the first time-frequency resource is greater than or equal to a seventh threshold.

The sixth threshold and the seventh threshold may also be predefined in a specification or configured by higher layer signaling.

Optionally, in some embodiments, the third condition includes at least one of the following:

a quantity of occupied REs is greater than or equal to an eighth threshold; and a ratio of the occupied REs to REs occupied by the first time-frequency resource is greater than or equal to a ninth threshold.

The eighth threshold and the ninth threshold may also be predefined in a specification or configured by higher layer signaling.

Optionally, thresholds may be respectively set for the eighth threshold and the ninth threshold to distinguish RE types, for example, to distinguish a DM-RS RE and a data RE. For example, when the available resource includes any DM-RS RE (the ninth threshold corresponding to the DM-RS RE is set to 1.0) in the time-frequency resource corresponding to the PUSCH/PDSCH transmission and a quantity of data REs included in the available resource meets the corresponding eighth threshold requirement or the quantity of the data a ratio of the REs included in the available resource to a quantity of data REs included in the time-frequency resource corresponding to the PUSCH/PDSCH transmission meets the corresponding ninth threshold, it is considered that the available resource meets the third condition.

Optionally, that the first device uses an available resource meeting a preset condition as a second time-frequency resource includes:

pruning the first time-frequency resource according to a preset rule in a case that at least one invalid RE exists in the first time-frequency resource, to obtain the second time-frequency resource, where the preset rule includes at least one of the following:

deleting a symbol including the invalid RE; and deleting a PRB including the invalid RE.

In this way, for the case that at least one invalid RE exists in the first time-frequency resource, performing resource pruning according to the preset rule to avoid the invalid RE may be preferentially considered; after the available resource is determined based on the preset rule, resource pruning may be further performed on the available resource to meet the preset condition, to obtain the second time-frequency resource; and when the available resource determined based on the preset rule meets the preset condition, the available resource is directly used as the second time-frequency resource. The preset rule may be understood as a rule adopted to prune the first time-frequency resource to avoid all invalid REs in a process of determining the second time-frequency resource according to the preset condition, and the preset rule is used for ensuring that the network side and the terminal determine one available resource in a case that there are a plurality of available resources meeting the preset condition.

If the preset rule includes: deleting the symbol including the invalid RE and deleting the PRB including the invalid RE, the preset rule may be understood as joint deleting in time domain and frequency domain, and the joint deleting in time domain and frequency domain is performed in a manner of ensuring that more available resources are obtained. For example, when consecutive is required in both time domain and frequency domain, it is similar to selecting another embedded rectangular region in a rectangular region (the rectangular region may be understood as a corresponding time-frequency resource, where two parallel sides in four sides of the rectangular region correspond to time domain/frequency domain, and the other two parallel sides correspond to frequency domain/time domain). It is required that the embedded rectangular region does not include any invalid RE and includes a maximum quantity of REs (alternatively, for a symbol granularity of time domain and/or a PRB granularity of frequency domain, it is required that the rectangular region includes a maximum quantity of symbol-PRB units, where a single symbol-PRB unit herein occupies a single PRB in frequency domain and occupies a single symbol in time domain). Optionally, the joint deleting in time domain and frequency domain requires ensuring consecutive in time domain and/or frequency domain of the second time-frequency resource. Optionally, the joint deleting in time domain and frequency domain requires ensuring a maximum quantity of REs (alternatively, data REs and/or DM-RS REs) included in the second time-frequency resource.

Optionally, that the first device performs the first physical channel transmission on the second time-frequency resource includes:

the first device determines a transmission attribute of the first physical channel transmission; and

the first device performs the first physical channel transmission based on the transmission attribute, where

the transmission attribute includes at least one of the following:

a modulation and coding scheme MCS index;
a redundancy version (Redundancy Version, RV); and
a transport block TB size.

Optionally, in some embodiments, the transmission attribute is determined based on whether the first physical channel transmission is used for carrying an initial transmission or a retransmission of data. An initial transmission of data may be understood as a first expected transmission or a first actual transmission of a transport block (Transport Block, TB) after the transport block is created, and a retransmission of data may be understood as another transmission of a transport block other than an initial transmission.

Optionally, in some embodiments, that the first device determines a transmission attribute of the first physical channel transmission includes:
in a case that the transmission attribute includes the MCS index and the first physical channel transmission is used for carrying an initial transmission of data, the first device performs:

using an MCS index in the resource configuration information as an MCS index of the first physical channel transmission; or
determining the MCS index of the first physical channel transmission based on the MCS index in the resource configuration information, and an MCS offset (Offset).

That is, in a case that the first physical channel is used for carrying the initial transmission of data, the first device (for example, UE) can keep an MCS index (Index) in the UL Grant/DL assignment unchanged; or the first device (for example, UE) determines the MCS Index of the first physical channel transmission according to the MCS Index in the UL Grant/DL Assignment, and an MCS Offset. The MCS Offset may indicate to increase or decrease by one or more MCS levels, and no further adjustment is performed when an upper limit (for example, 27/28) or a lower limit (for example, 0) of a normal MCS level has been reached. The MCS Offset may be predefined in a specification or configured by higher layer signaling.

It should be learned that, in this embodiment, in a case that the first physical channel is used for carrying an initial transmission of data, the first device performs an operation of determining the MCS Index of the first physical channel transmission, namely, a first operation.

Optionally, in some embodiments, that the first device determines a transmission attribute of the first physical channel transmission includes:
in a case that the transmission attribute includes the RV, the first device performs:

using an RV in the resource configuration information as an RV of the first physical channel transmission; or
using an RV predefined in a specification or configured by higher layer signaling as the RV of the first physical channel transmission.

That is, for the RV, the first device (for example, UE) may keep an RV in the UL Grant/DL Assignment unchanged, or use the RV predefined in a specification or configured by higher layer signaling.

The RV determined herein is both applicable to a case that the first physical channel transmission is used for carrying an initial transmission of data and applicable to a case that the first physical channel transmission is used for carrying a retransmission of data.

Optionally, in some embodiments, that the first device determines a transmission attribute of the first physical channel transmission includes:

in a case that the transmission attribute includes the TB size (Size) and the first physical channel transmission is used for carrying an initial transmission of data,
the first device determines the TB size corresponding to the first physical channel transmission based on a target item, where the target item includes at least one of the following: a quantity of PRBs, a quantity of symbols, and the MCS index, where the quantity of PRBs or the quantity of symbols corresponds to the available resource or is indicated by the resource configuration information; and the MCS index is determined by the first device based on a first operation; or
in a case that the first device performs repetition transmissions in a transmission occasion corresponding to the first physical channel transmission, determining the TB size corresponding to the first physical channel transmission includes any one of the following:

using a TB size indicated by the resource configuration information as the TB size corresponding to the first physical channel transmission; or
determining the TB size corresponding to the first physical channel transmission based on a quantity of PRBs and a quantity of symbols corresponding to a target available resource and the MCS index determined by the first device based on the first operation, where
the target available resource is an available resource corresponding to a target repetition transmission among performable repetition transmissions in the transmission occasion.

That is, in a case that the first physical channel transmission is used for carrying an initial transmission of data:

On one hand, the first device (for example, UE) can determine the TB Size of the first physical channel transmission based on the quantity of PRBs and the quantity of symbols corresponding to the available resource and the MCS index (Index) determined according to the first operation.

On another hand, the first device (for example, UE) can determine the TB Size of the first physical channel transmission based on the quantity of PRBs and the quantity of symbols indicated by the UL Grant/DL Assignment and the MCS Index determined according to the first operation. In this case, when a part of a transmission is performed, the TB Size remains unchanged, and a modulation order (Modulation Order) follows an indication corresponding to the MCS Index. However, since the available resource is fewer than the time-frequency resource indicated in the UL Grant/DL Assignment, an actual transmission code rate is increased. That is, the actual code rate is not equal to the target code rate R corresponding to the MCS Index.

On still another hand, the first device (for example, UE) follows the TB Size corresponding to the UL Grant/DL Assignment in a case that Repetition transmissions exist in an Occasion corresponding to the first physical channel transmission; or determines the TB Size of the first physical channel transmission based on the quantity of PRBs and the quantity of symbols corresponding to the target available resource and the MCS Index determined according to the first operation. The first device may directly follow the TB Size corresponding to the UL Grant/DL Assignment; or considering a limiting condition, follow the TB Size corresponding to the UL Grant/DL Assignment when a complete repetition (that is, no RE occupied by the repetition is determined as invalid) exists in performable Repetition transmissions in the Occasion.

In this embodiment, the target available resource is an available resource corresponding to the target Repetition transmission performable in the Occasion. Optionally, when the Occasion corresponds to Repetition transmissions, an available resource corresponding to a set or a subset formed by valid REs in a time-frequency resource corresponding to one Repetition transmission in the Occasion meets the foregoing preset condition. That is, the Repetition transmissions are performable Repetition transmissions in the Occasion (or it is considered that this Repetition in the Occasion may be performed), or it may be understood as that a part of a transmission based on the available resource is allowed. One or more Repetition transmissions may be performed in the Occasion, and the target Repetition transmission is a Repetition transmission with a maximum or minimum quantity of REs (or quantity of data REs) in a corresponding available resource.

In addition, optionally, in some embodiments, after the first device determines the TB size corresponding to the first physical channel transmission, the method further includes:

in a case that the first device performs repetition transmissions in the transmission occasion corresponding to the first physical channel transmission, adjusting the TB size corresponding to the first physical channel transmission based on a quantity of the performable repetition transmissions in the transmission occasion or a ratio of the quantity of the performable repetition transmissions in the transmission occasion to a quantity of repetition transmissions configured in the transmission occasion.

That is, when Repetition transmissions exist in the Occasion corresponding to the first physical channel transmission, after the TB Size is determined according to any one of the foregoing, the first device may further convert the TB size based on the quantity of the performable Repetition transmissions in the Occasion or the ratio of the quantity of the performable Repetition transmissions in the Occasion to the quantity of the Repetition transmissions configured in the Occasion. For example, assuming that the quantity of the Repetition transmissions configured in the Occasion is 4, and the quantity of the performable Repetition transmissions in the Occasion is 3, the ratio of the two quantities is 3/4=0.75, and an actually used TB Size=rounding down floor (a product of the TB Size determined before and 0.75).

Optionally, in some embodiments, that the first device determines a transmission attribute of the first physical channel transmission includes:

in a case that the transmission attribute includes the TB size and the first physical channel transmission is used for carrying a retransmission of data, the first device uses a TB size corresponding to the initial transmission of the data as the TB size corresponding to the first physical channel transmission.

That is, in a case that the first physical channel transmission is used for carrying a retransmission of data, the TB Size used by the first device (for example, UE) may be consistent with a TB Size determined in a case that the first physical channel transmission is used for carrying an initial transmission of data.

Optionally, in some embodiments, in a case that the transmission attribute includes the RV and the first physical channel transmission is used for carrying a retransmission of data, the first device performs:

using an RV in the resource configuration information as an RV of the first physical channel transmission; or

using an RV predefined in a specification or configured by higher layer signaling as the RV of the first physical channel transmission.

Optionally, in some embodiments, that the first device determines a transmission attribute of the first physical channel transmission includes:
in a case that the transmission attribute includes the MCS index, the first physical channel transmission is used for carrying a retransmission of data, and the resource configuration information indicates a first normal MCS level, the first device performs any one of the following:

expecting that a TB size obtained based on a quantity of PRBs and a quantity of symbols corresponding to the available resource and a target MCS index to be the same as a TB size corresponding to initial transmission of the data, where the target MCS index corresponds to the first normal MCS level or is determined according to an MCS index corresponding to the first normal MCS level and an MCS offset;
using a first reserved MCS index as an MCS index of the first physical channel transmission, where a modulation order corresponding to the first reserved MCS index is the same as a modulation order corresponding to the first normal MCS level; or
using a second reserved MCS index as the MCS index of the first physical channel transmission, where a modulation order corresponding to the second reserved MCS index is the same as a modulation order corresponding to a second normal MCS level, and the second normal MCS level is determined based on the first normal MCS level and the MCS offset.

That is, in a case that the first physical channel transmission is used for carrying a retransmission of data and the resource configuration information indicates a first normal MCS level:
On one hand, the first device (for example, UE) expects that a TB size the same as the TB size corresponding to an initial transmission of the data can be obtained based on the quantity of PRBs and the quantity of symbols corresponding to the available resource and the target MCS Index. The target MCS Index may correspond to the first normal MCS level; or may be determined according to the MCS Index corresponding to the first normal MCS level indicated by the UL Grant/DL Assignment and the MCS Offset (that is, the MCS Offset is applied to the MCS Index corresponding to the first normal MCS level indicated by the UL Grant/DL Assignment to obtain the target MCS Index). In this case, the MCS Index applied to/corresponding to the first physical channel transmission is the target MCS Index.

On another hand, the first device (for example, UE) uses a reserved MCS Index whose modulation order is the same as the modulation order corresponding to the first normal MCS level, namely, the first reserved MCS Index as an MCS Index of the first physical channel transmission. That is, the modulation order is kept unchanged while ensuring that the TB Size follows the TB Size corresponding to an initial transmission.

On still another hand, the first device (for example, UE) uses a reserved MCS Index whose modulation order is the same as the modulation order corresponding to the second normal MCS level, namely, the second reserved MCS Index as the MCS Index of the first physical channel transmission. The second normal MCS level is determined based on the MCS Index corresponding to the first normal MCS level and the MCS Offset (that is, the MCS Offset is applied to the MCS Index corresponding to the first normal MCS level to obtain an MCS Index, where the MCS Index corresponds to the second normal MCS level). That is, the modulation order is corrected based on the MCS Offset while ensuring that the TB Size follows the TB size corresponding to an initial transmission.

Optionally, the first normal MCS level may alternatively be indicated by CG uplink control information (CG Uplink Control Information, CG-UCI).

Optionally, the UL Grant/DL Assignment or the CG-UCI may further indicate a reserved MCS level. In this case, the first device, for example, UE may directly follow the reserved MCS level. The MCS Offset is only applied to a normal MCS level and is not applied to the reserved MCS level.

The following describes execution of a part of a transmission based on the available resource based on any one of the following cases with reference to examples.

Example 1. A transmission case 1 is an initial transmission, which may be applicable to a CG/DG PUSCH transmission and an SPS/DG PDSCH transmission.

The UE may determine a transmission attribute corresponding to initially transmitted data based on at least one of the following:

1) Determination of MCS Index.

Generally, the MCS Index herein corresponds to a normal MCS level. The UE may keep the MCS Index in the UL Grant/DL Assignment unchanged, or determine an applied MCS Index based on the MCS Index in the UL Grant/DL Assignment and the MCS Offset. The MCS Offset may indicate to increase or decrease by one or more MCS levels (no further adjustment is performed when an upper limit (for example, 27/28) or a lower limit (for example, 0) of the normal MCS level has been reached), and may be agreed on in a protocol or configured by higher layer signaling.

2) Determination of RV.

The UE may keep the RV in the UL Grant/DL Assignment unchanged, or use an RV predefined in a specification or configured by higher layer signaling.

3) Determination of TB Size.

The UE calculates the TB Size based on an existing rule based on the quantity of PRBs and the quantity of symbols corresponding to the available resource and the determined MCS Index.

Optionally, the UE still calculates the TB Size based on the existing rule based on the quantity of PRBs and the quantity of symbols indicated in the UL Grant/DL Assignment and the MCS Index. In this case, when a part of a transmission is performed, the TB Size remains unchanged, and a Modulation Order follows an indication corresponding to the MCS Index. However, since the available resource is fewer than the time-frequency resource indicated in the UL Grant/DL Assignment, an actual transmission code rate is increased (that is, the actual code rate is not equal to the target code rate R corresponding to the MCS Index).

Optionally, when the Occasion corresponding to the PUSCH/PDSCH transmission corresponds to Repetition transmissions, the UE may determine the TB Size based on any one of the following:

- directly following the TB Size corresponding to the UL Grant/DL Assignment;
- following the TB Size corresponding to the UL Grant/DL Assignment provided that a complete Repetition (that is, no RE occupied by the repetition is determined as invalid) exists in performable Repetition transmissions in the Occasion; or
- calculating the TB Size based on the existing rule based on a quantity of PRBs and a quantity of symbols corresponding to an available resource corresponding to a Repetition with a maximum/minimum quantity of REs or data REs in the corresponding available resource in the performable Repetition transmissions in the Occasion and the determined MCS Index.

Optionally, after the TB Size is determined based on any one of the foregoing, the TB Size may be further converted based on a quantity of performable Repetition transmissions in the Occasion or a ratio of the quantity of the performable Repetition transmissions in the Occasion to a quantity of Repetition configured in the Occasion. For example, assuming that the quantity of the Repetition configured in the Occasion is 4, and the quantity of the performable Repetition transmissions is 3, the ratio of the two quantities is 3/4=0.75, and an actually used TB Size=floor (a product of the TB Size determined and 0.75).

When the PUSCH/PDSCH transmission is actually performed, encoded bits can be mapped only on data REs corresponding to the available resource, that is, the available resource is matched based on Rate matching. Optionally, encoded bits may alternatively be mapped on data REs corresponding to the time-frequency resource indicated by the UL Grant/DL Assignment, but an actual transmission is only performed on the data REs corresponding to the available resource, that is, the available resource is matched based on Puncturing.

Optionally, for a PUSCH transmission, CG-UCI may be further carried to assist in decoding on the network side, to improve reliability of decoding on the PUSCH (for example, when determination of invalid REs involves information dynamically indicated by the network side, understanding on two sides may not be completely consistent due to missed detection of DCI). The CG-UCI may indicate related information of the available resource, for example, a start index, a quantity, or the like of symbols/PRBs, and whether the CG-UCI is carried may be agreed on in a protocol or configured by higher layer signaling. A location of an RE carrying the CG-UCI in the time-frequency resource corresponding to the PUSCH/PDSCH transmission may be predefined in a specification or configured by higher layer signaling, and it is ensured that the RE is not determined as invalid.

Example 2. A transmission case 2 is a retransmission, which may be applicable to an NR-U CG PUSCH transmission and a DG PUSCH/PDSCH transmission.

The UE may determine a transmission attribute corresponding to retransmitted data based on at least one of the following:

1) Determination of TB Size.

The UE may assume that the TB Size is consistent with that of a corresponding initial transmission.

2) Determination of RV.

The UE may keep the RV in the UL Grant/DL Assignment unchanged, or use an RV agreed on in a protocol or configured by higher layer signaling.

3) Determination of MCS Index.

Corresponding operations may be respectively performed by distinguishing the following cases:

- Retransmission MCS case 1: The UE Grant/DL Assignment or the CG-UCI indicates a normal MCS level,

any one of the following operations may be performed:

The UE expects that a TB Size calculated based on an existing rule based on the quantity of PRBs and the quantity of symbols corresponding to the available resource and an MCS Index corresponding to the normal MCS level or the MCS Index corresponding to the normal MCS level and an MCS Index determined according to the MCS Offset is consistent with that of the initial transmission.

The UE uses a reserved MCS level having the same corresponding modulation order as that of the normal MCS level or a normal MCS level determined based on the normal MCS level and the MCS Offset. That is, the modulation order remains unchanged while ensuring that the TB Size follows the TB size corresponding to an initial transmission, or the modulation order is corrected based on the MCS Offset.

- Retransmission MCS case 2: The UE Grant/DL Assignment or the CG-UCI reserved for a reserved MCS level

The UE may directly follow the reserved MCS level. It is assumed that the MCS Offset is only applied to a normal MCS level and is not applied to the reserved MCS level.

Optionally, in some embodiments, step 201 includes:

the first device determines a time-frequency resource indicated by the resource configuration information as the first time-frequency resource; or the first device adjusts, based on a type of a time domain unit in which the first physical channel transmission is located, the time-frequency resource indicated by the resource configuration information, to obtain the first time-frequency resource.

That is, the first time-frequency resource may be the time-frequency resource indicated by the resource configuration information, or may be a time-frequency resource obtained by adjusting the time-frequency resource indicated by the resource configuration information according to the type of the time domain unit in which the first physical channel transmission is located.

Optionally, in some embodiments, the time-frequency resource indicated by the resource configuration information is applied to a first type of time domain units, and a time-frequency resource corresponding to another type of time domain units is adjusted based on the time-frequency resource indicated by the resource configuration information, where the first type of time domain units is a single type of time domain units, and the another type of time domain units type is any type of time domain units other than the first type of time domain units; and that the first device adjusts, based on a type of a time domain unit in which the first physical channel transmission is located, the time-frequency resource indicated by the resource configuration information includes:

if the type of the time domain unit in which the first physical channel transmission is located is the first type of time domain units, the first device determines the time-frequency resource indicated by the resource configuration information as the first time-frequency resource; and if the type of the time domain unit in which the first physical channel transmission is located is the another type of time domain units, the first device adjusts, based on a first resource offset, the time-frequency resource indicated by the resource configuration information, to obtain the first time-frequency resource.

The first resource offset may include a frequency domain Offset and/or a time domain Offset. The first type of time domain units may be predefined in a specification or configured by higher layer signaling, for example, a first type of time domain units.

For example, when the time-frequency resource indicated by the UL Grant/DL Assignment is applied to a type of time domain units (the first type of time domain units), the first device determines the time-frequency resource indicated by the UL Grant/DL Assignment as the first time-frequency resource when the type of the time domain unit in which the first physical channel transmission is the time domain unit type; and adjusts the time-frequency resource indicated by the UL Grant/DL Assignment based on the first resource offset when the type of the time domain unit in which the first physical channel transmission is another type of time domain units other than the type of time domain units, to obtain the first time-frequency resource.

The frequency domain is used as an example, adjusting the time-frequency resource indicated by the resource configuration information based on the first resource offset may be: applying the frequency domain Offset to frequency domain resource assignment information in the UL Grant/DL Assignment (that is, the frequency domain Offset is applied to each assigned frequency domain resource, or the frequency domain Offset is applied as a whole to an assigned frequency domain resource set, to obtain frequency domain resource assignment information corresponding to the another type of time domain units). In this way, after the adjustment, frequency domain resource assignment information actually applied to the first physical channel transmission corresponds to the another type of time domain units. The frequency domain Offset may be configured by the RRC or may be indicated by the activation DCI (for the CG Config Type 2/SPS Config), and a unit thereof may be a PRB, a subcarrier, or the like. It may be understood that, before and after the frequency domain Offset is applied, a quantity of frequency domain resources does not change, and only a location of the frequency domain resource changes. By applying the frequency domain Offset, frequency domain locations of the frequency domain resource assignment information matching an uplink/downlink resource in a first type of time domain units or a second type of time domain units differ from each other, to avoid or reduce resource conflicts (for example, avoid or reduce existence of invalid REs), or semi-statically configured resources are uniformly placed at an expected frequency domain location (for example, a carrier edge of an uplink slot) to implement planned resource coordination, thereby improving overall data transmission performance of a cell.

Optionally, for a time domain configuration of a time-frequency resource used by the another type of time domain units, time domain resource assignment information in the UL Grant/DL Assignment may be followed, or the time domain Offset may be applied as a whole to the time domain resource assignment information, where a unit of the time domain Offset may be a slot, and a value thereof may be predefined in a specification or configured by higher layer signaling.

In addition, optionally, in some embodiments, a time-frequency resource corresponding to a second type of time domain units is adjusted based on the time-frequency resource indicated by the resource configuration information, where the second type of time domain units is any type of time domain units; and

that the first device adjusts, based on a type of a time domain unit in which the first physical channel transmission is located, the time-frequency resource indicated by the resource configuration information includes:

the first device adjusts, based on a second resource offset, the time-frequency resource indicated by the resource configuration information, to obtain the first time-frequency resource, where the second resource offset corresponds to the type of the time domain unit in which the first physical channel transmission is located.

The second resource offset may include a frequency domain Offset and/or a time domain Offset.

The frequency domain is used as an example, for example, the UL Grant/DL Assignment provides frequency domain resource assignment information (which may be referred to as basic information/Baseline), and for a frequency domain configuration of a time-frequency resource used by each time domain unit type, the corresponding frequency domain Offset may be applied to the frequency domain resource assignment information in the UL Grant/DL Assignment to obtain actually applied frequency domain resource assignment information. For details of determination and application of the frequency domain Offset, reference may be made to the foregoing description.

Optionally, for a time domain configuration of the time-frequency resource used by each time domain unit type, time domain resource assignment information in the UL Grant/DL Assignment may be followed, or the corresponding time domain Offset may be applied as a whole to the time domain resource assignment information, where a unit of the time domain Offset may be a slot, and a value thereof may be predefined in a specification or configured by higher layer signaling.

In addition, the foregoing manner of applying the first resource offset or the second resource offset may be applied to other physical channel transmissions or a physical signal transmission other than the shared channel transmission, for example, applied to a PUSCH transmission, a physical uplink control channel (physical Uplink Control Channel, PUCCH) transmission, a sounding reference signal (Sounding Reference Signal, SRS) transmission, or a physical random access channel (Physical Random Access Channel, PRACH) transmission, or applied to a physical downlink shared channel (physical DownLink Shared Channel, PDSCH) transmission, a physical downlink control channel (physical Down Control Channel, PDCCH) transmission, or a channel-state information reference signal (Channel-state information reference signal, CSI-RS) transmission. Correspondingly, the resource configuration information is replaced with resource configuration information corresponding to an applied physical channel or physical signal, which includes information configured by a higher layer and/or information indicated by DCI.

In addition, optionally, after the first device determines, according to the resource configuration information, the first time-frequency resource transmitted on the first physical channel, the method further includes: the first device adjusts a transmission attribute of the first physical channel transmission based on a type of a time domain unit in which the first physical channel transmission is located.

The transmission attribute of the adjustment object may be the transmission attribute of the first physical channel transmission that is determined by using the foregoing method, or may be the transmission attribute of the first physical channel transmission determined by using another method, for example, a transmission attribute in directly applied resource configuration information.

Optionally, a transmission attribute indicated by the resource configuration information is applied to a third type of time domain units, and a transmission attribute corresponding to another type of time domain units is adjusted based on the transmission attribute indicated by the resource configuration information, where the third type of time domain units is a single type of time domain units, and the another type of time domain units is any type of time domain units other than the third type of time domain units; and

that the first device adjusts a transmission attribute of the first physical channel transmission based on a type of a time domain unit in which the first physical channel transmission is located includes:

if the type of the time domain unit in which the first physical channel transmission is located is the third type of time domain units, the first device determines the transmission attribute indicated by the resource configuration information as the transmission attribute of the first physical channel transmission; and if the type of the time domain unit in which the first physical channel transmission is located is the another type of time domain units, the first device adjusts, based on a first attribute offset, the transmission attribute indicated by the resource configuration information, and uses an adjusted transmission attribute as the transmission attribute of the first physical channel transmission.

The MCS Index is used as an example, the MCS Index indicated by the UL Grant/DL Assignment is applied to one type of time domain units (the third type of time domain units), and an MCS Index used by the another type of time domain units may be obtained by applying the MCS Offset to the MCS Index indicated by the UL Grant/DL Assignment. Certainly, other transmission attributes may also be adjusted in the same manner, and details are not described herein.

Optionally, a time-frequency resource corresponding to a fourth time domain unit type is adjusted based on a time-frequency resource indicated by the resource configuration information, where the fourth time domain unit type is any time domain unit type; and

that the first device adjusts a transmission attribute of the first physical channel transmission based on a type of a time domain unit in which the first physical channel transmission is located includes:

the first device adjusts, based on a second attribute offset, a transmission attribute indicated by the resource configuration information, and uses an adjusted transmission attribute as the transmission attribute of the first physical channel transmission, where the second attribute offset corresponds to the type of the time domain unit in which the first physical channel transmission is located.

The MCS Index is used as an example, an MCS Index used by each time domain unit type is obtained by applying a corresponding MCS Offset to the MCS Index indicated by the UL Grant/DL Assignment. Certainly, other transmission attributes may also be adjusted in the same manner, and details are not described herein.

In the embodiments of this application, the manner of applying the MCS Offset is similar to the manner of applying the first resource offset or the second resource offset, and a difference only lies in an offset dimension. Details are not described herein again.

Application of the MCS Offset may match different antenna configurations, transmit power, interference statuses corresponding to different time domain unit types, so that an actually applied MCS Index better matches a link situation, thereby improving performance such as reliability and throughput of a data transmission.

In addition, the application of the MCS Offset leads to different TB Sizes corresponding to different Occasions. To ensure that TB Sizes corresponding to various Occasions are the same or similar to each other, a PRB quantity offset may be further introduced for different Occasions. For example, for an Occasion with a small MCS Index, N (N≥0) consecutive PRBs are supplemented to a frequency domain resource set, and due to selection of N, a difference between the TB Size calculated according to the Occasion with a small MCS Index and a TB Size calculated according to an Occasion with a large MCS Index is less than or not greater than a threshold. The resources supplemented in a low-frequency/high-frequency direction to the set and the threshold may be respectively predefined in a specification or configured by higher layer signaling.

Optionally, the MCS Offset is applied for the MCS level. for a CG PUSCH/SPS PDSCH, the Occasion corresponds to a normal MCS level (which is determined according to the UL Grant configured by higher layer signaling or the UL Grant/DL Assignment indicated by the activation DCI and is used for calculating the TB Size); and for a DG PUSCH/PDSCH, the Occasion may correspond to a normal MCS level or a reserved MCS level. When the Occasion corresponds to a normal MCS level, the UE may determines an applied MCS Index based on the MCS Index of the UL Grant/DL Assignment and the MCS Offset. The MCS Offset may indicate to increase or decrease by one or more MCS levels (no further adjustment is performed when an upper limit (for example, 27/28) or a lower limit (for example, 0) of the normal MCS level has been reached), and may be predefined in a specification or configured by higher layer signaling.

In the embodiments of this application, a Semi-static flexible time domain unit is a Semi-static flexible time domain unit allowing flexible duplex operations. For whether an occupation limitation exists on an uplink resource corresponding to an uplink sub-band (UL sub-band) in the Semi-static flexible time domain unit (that is, the uplink resource must be limited within a frequency domain range corresponding to the UL sub-band) or whether an occupation limitation exists on a downlink resource corresponding to a downlink sub-band (DL sub-band) (that is, the downlink resource must be limited within a frequency domain range corresponding to the DL sub-band), any one of the following manners may be used:

A frequency domain limitation manner 1: The limitation exists, so that in the Semi-static flexible time domain unit, only the frequency domain range corresponding to the UL sub-band is used as an available uplink resource, and only the frequency domain range corresponding to the DL sub-band is used as an available downlink resource.

A frequency domain limitation manner 2: The limitation does not exist, so that in the Semi-static flexible time domain unit, all the frequency domain ranges corresponding to an uplink BWP (that is, not limited to the frequency domain range corresponding to the UL sub-band) can be used as available uplink resources, and all the frequency domain ranges corresponding to a downlink BWP (that is, not limited to the frequency domain range corresponding to the DL sub-band) can be used as available downlink resources, provided that other requirements such as non-overlapping (Non-overlapping) and a Guard Band of the flexible duplex mode are met.

Optionally, in some embodiments, if the first physical channel transmission is an uplink transmission, the typetype of the time domain unit includes a first type of time domain units and/or a second type of time domain units; and the first type of time domain units is any time domain unit having available uplink resources in the range of an uplink bandwidth part BWP, and the second type of time domain units is any time domain unit having available uplink resources only in the range of an uplink sub-band;
and/or

if the first physical channel transmission is a downlink transmission, the type of the time domain unit includes a third type of time domain units and/or a fourth type of time domain units; and the third type of time domain units is any time domain unit having available downlink resources in the range of a downlink BWP, and the fourth type of time domain units is any time domain unit having available downlink resources only in the range of a downlink sub-band.

It should be noted that, description is provided by using an example in which four types of time domain units (for example, the first type of time domain units, the second type of time domain units, the third type of time domain units, and the fourth type of time domain units) are involved in the embodiments of this application, but the description may be further applied to a case of more than four types of time domain units as required. For example, the PUSCH transmission may be further applied to a case of more than two types of time domain units as required; and the PDSCH transmission may be further applied to a case of more than two types of time domain units as required. In this case, an Ath type of time domain units may be correspondingly adjusted.

Optionally, in some embodiments, the first type of time domain units includes at least one of the following:

semi-static Semi-static uplink time domain units; and first semi-static flexible time domain units, where in a first semi-static flexible time domain unit, all the frequency domain range corresponding to the uplink BWP can be as the available uplink resources, that is, the foregoing frequency domain limitation manner 2 is used; and the first semi-static flexible time domain units are semi-static flexible time domain units allowing flexible duplex operations.

Optionally, in some embodiments, the second type of time domain units includes at least one of the following:

semi-static downlink time domain units, where the semi-static downlink time domain units may be understood as semi-static DL time domain units configured in the UL sub-band; and second semi-static flexible time domain units, where in a second semi-static flexible time domain unit, only the frequency domain range corresponding to the uplink sub-band can be as the available uplink resources, that is, the foregoing frequency domain limitation manner 1 is used; and the second semi-static flexible time domain units are semi-static flexible time domain units allowing flexible duplex operations.

Optionally, in some embodiments, the third type of time domain units includes at least one of the following:

semi-static downlink time domain units; and

third semi-static flexible time domain units, where in a third Semi-static flexible time domain unit, all the frequency domain ranges corresponding to the downlink BWP is usable as the available downlink resources, that is, the foregoing frequency domain limitation manner 2 is used; and the third semi-static flexible time domain units are semi-static flexible time domain units allowing flexible duplex operations.

Optionally, in some embodiments, the fourth type of time domain units includes at least one of the following:

semi-static uplink time domain units, where the semi-static uplink time domain units may be understood as semi-static UL time domain units configured in the DL sub-band; and
fourth semi-static flexible time domain units, where in a fourth Semi-static flexible time domain unit, only the frequency domain range corresponding to the downlink sub-band is usable as the available downlink resources, that is, the foregoing frequency domain limitation manner 1 is used; and the fourth semi-static flexible time domain units are semi-static flexible time domain units allowing flexible duplex operations.

Optionally, a time domain unit in which the PUSCH/PDSCH transmission is located may be understood as any time domain unit occupied by the PUSCH/PDSCH transmission, for example, an occupied slot or symbol.

Generally, the time domain unit in which the PUSCH transmission is located only corresponds to one of the first type of time domain units or the second type of time domain units. Optionally, a part of the time domain unit in which the PUSCH transmission is located belongs to the first type of time domain units (assuming that this part involves N1 time domain units), and another part of the time domain unit belongs to the second type of time domain units (assuming that this part involves N2 time domain units; and this case may be understood as that the time domain unit in which the PUSCH transmission is located corresponds to the first type of time domain units and the second type of time domain units simultaneously). In this case, a time domain unit type corresponding to a larger value of N1 and N2 may be taken as a type of the time domain unit in which the PUSCH transmission is located.

Generally, the time domain unit in which the PDSCH transmission is located only corresponds to one of the third type of time domain units or the fourth type of time domain units. Optionally, a part of the time domain unit in which the PDSCH transmission is located belongs to the third type of time domain units (assuming that this part involves N3 time domain units), and another part of the time domain unit belongs to the fourth type of time domain units (assuming that this part involves N4 time domain units; and this case may be understood as that the time domain unit in which the PDSCH transmission is located corresponds to the third type of time domain units and the fourth type of time domain units simultaneously). In this case, a time domain unit type corresponding to a larger value of N3 and N4 may be taken as a type of the time domain unit in which the PDSCH transmission is located.

In addition, in some embodiments, before step 202, the method further includes:

if at least two physical channel transmissions need to be performed within a slot, the first device determines, based on a first rule, a target physical channel transmission to be performed.

The first rule includes at least one of the following:

Rule 1: excluding an invalid physical channel transmission. This may also be understood as that when Manner 1 is applied, a PUSCH/PDSCH transmission that is determined as invalid or unavailable is not taken into consideration.

Rule 2: excluding a physical channel transmission whose corresponding available resource does not meet a preset condition. This may also be understood as that when Manner 2 is applied, a PUSCH/PDSCH transmission whose corresponding available resource does not meet the preset condition is not taken into consideration.

Rule 3: for second physical channel transmissions overlapping in time domain, only performing a physical channel transmission corresponding to target resource configuration information. This may also be understood as that for two or more CG PUSCH transmissions overlapping in time domain, only a CG PUSCH transmission corresponding to a minimum Config Index/a maximum CG Config is performed, or for two or more SPS PDSCH transmissions overlapping in time domain, only a CG PUSCH/SPS PDSCH transmission corresponding to a minimum Config Index/a maximum SPS Config is performed.

Rule 4: for physical channel transmissions overlapping in time domain, only performing a physical channel transmission that is dynamically scheduled. This may also be understood as that for a CG PUSCH transmission and a DG PUSCH transmission overlapping in time domain, only the DG PUSCH transmission is taken into consideration, or for an SPS PDSCH transmission and a DG PDSCH transmission overlapping in time domain, only the DG PDSCH transmission is taken into consideration.

Rule 5: for physical channel transmissions overlapping in time domain, only performing a physical channel transmission whose all corresponding REs are valid. This may also be understood as that for two or more PUSCH transmissions overlapping in time domain, only a PUSCH transmission whose all REs are determined as valid is performed, or for two or more PDSCH transmissions overlapping in time domain, only a PDSCH transmission whose all REs are determined as valid is performed.

Rule 6: in a case that a quantity of valid physical channel transmissions within the slot is greater than a first threshold, sequentially excluding each physical channel transmission with a low priority based on a first priority sequence until a quantity of physical channel transmissions expected to be performed within the slot does not exceed the first threshold, where the first priority sequence includes: a transmission priority of a physical channel transmission that is dynamically scheduled is higher than that of a physical channel transmission that is semi-statically configured, and/or a transmission priority of a physical channel transmission that corresponds to a configuration index N1 and is semi-statically configured is higher than a transmission priority of a physical channel transmission that corresponds to a configuration index N2 and is semi-statically configured, where N1 is an integer greater than or equal to 0, N2 is an integer greater than or equal to 0, and N1 is less than or greater than N2. This may also be understood as that when a quantity of PUSCH transmissions that are determined as valid or available within the Slot exceeds a maximum quantity that can be supported by the UE, the DG PUSCH transmission is most preferentially performed, and the CG PUSCH transmission corresponding to a small Config Index/a large CG Config is then performed until the quantity of transmissions expected to be performed does not exceed the maximum quantity that can be supported by the UE, or when a quantity of PDSCH transmissions that are determined as valid or available within the Slot exceeds the maximum quantity that can be supported by the UE, the DG PDSCH transmission is most preferentially performed, and the SPS PDSCH transmission corresponding to a small Config Index/a large SPS Config is then performed until the quantity of transmissions expected to be performed does not exceed the maximum quantity that can be supported by the UE.

Rule 7: in a case that the quantity of the valid physical channel transmission within the slot is greater than the first threshold, sequentially excluding each physical channel transmission with a low priority based on a second priority sequence until the quantity of the physical channel transmissions expected to be performed within the slot does not exceed the first threshold, where the second priority sequence includes: a transmission priority of a physical channel transmission whose all REs are valid is higher than a transmission priority of a physical channel transmission whose at least one RE is invalid. This may also be understood as that when the quantity of the PUSCH transmissions that are determined as valid or available within the Slot exceeds the maximum quantity that can be supported by the UE, the PUSCH transmission whose all REs are determined as valid is first performed until the quantity of the transmissions expected to be performed does not exceed the maximum quantity that can be supported by the UE, or when the quantity of the PDSCH transmissions that are determined as valid or available within the Slot exceeds the maximum quantity that can be supported by the UE, the PDSCH transmission whose all REs are determined as valid is first performed until the quantity of the transmissions expected to be performed does not exceed the maximum quantity that can be supported by the UE.

It may be understood that, when the first device performs a to-be-performed target physical channel transmission based on the first rule, transmission directions corresponding to the at least two physical channel transmissions that need to be performed within the slot are the same.

Rule 1 is applicable to a case that when Manner 1 is applied to the first physical channel transmission, and Rule 2 is applicable to a case that when Manner 2 is applied to the first physical channel transmission.

In Rule 3, the target resource configuration information is resource configuration information corresponding to a maximum/minimum configuration index (Config Index), and for example, a CG Config/SPS Config with the maximum/minimum Config Index. The second physical channel transmissions overlapping in time domain may be two or more CG PUSCH/SPS PDSCH transmissions overlapping in time domain.

In Rule 4, the physical channel transmissions overlapping in time domain may be a CG PUSCH transmission and a DG PUSCH transmission overlapping in time domain, or may be an SPS PDSCH transmission and a DG PDSCH transmission overlapping in time domain.

In Rule 5, the physical channel transmissions overlapping in time domain may be two or more PUSCH/PDSCH transmissions overlapping in time domain.

The valid physical channel transmission in Rule 6 is obtained by determining whether the transmission is valid based on Manner 1 or Manner 2. The first threshold may be a quantity of maximum physical channel transmissions that can be supported by the terminal. The physical channel transmission that is semi-statically configured includes a CG PUSCH transmission corresponding to the CG Config and an SPS PDSCH transmission corresponding to the SPS Config.

When the foregoing Rule 3, Rule 4, and Rule 5 are combined, for two or more PUSCH/PDSCH transmissions overlapping in time domain, only a PUSCH/PDSCH transmission whose all REs are determined as valid is performed. When more than one PUSCH/PDSCH transmissions whose all REs are determined as valid, when one of the transmissions is a DG PUSCH/PDSCH transmission (which is considered as at most one at present and needs to be ensured through dynamic scheduling on the network side), the DG PUSCH/PDSCH transmission is performed; when all the transmissions are CG PUSCH transmissions, only the CG PUSCH transmission corresponding to the CG Config with the minimum/maximum Config Index is performed; and when all the transmissions are SPS PDSCH transmissions, only the SPS PDSCH transmission corresponding to the SPS Config with the minimum/maximum Config Index is performed.

When the foregoing Rule 6 and Rule 7 are combined, when the quantity of PUSCH/PDSCH transmissions that are determined as valid or available within the Slot exceeds the maximum quantity that can be supported by the UE, the PUSCH/PDSCH transmission whose all REs are determined as valid is preferentially performed; and when a quantity of the PUSCH/PDSCH transmissions whose all REs are determined as valid still exceeds the maximum quantity that can be supported by the UE, when one of the transmissions is a DG PUSCH transmission, all the DG PUSCHs are reserved; when at least one of the transmissions is a DG PDSCH transmission, all the DG PDSCH transmission is reserved (which is considered at present that dynamic scheduling on the network side ensures that a quantity of DG PUSCH/PDSCH transmissions within a single Slot does not exceed the maximum quantity that can be supported by the UE); when at least one of the transmissions is a CG PUSCH transmission, the CG PUSCH transmission corresponding to a CG Config with a small/large Config Index is preferentially performed; or when at least one of the transmissions is an SPS PDSCH transmission, the SPS PDSCH transmission corresponding to an SPS Config with a small/large Config Index is preferentially performed, until the quantity of the transmissions expected to be performed does not exceed the maximum quantity that can be supported by the UE.

Based on the above, in the flexible duplex mode, different self-adaptive transmission solutions are introduced for uplink/downlink resources with different attributes existing in an SBFD carrier, to ensure a transmission opportunity on a PUSCH/PDSCH and transmission performance.

An entity executing the transmission processing method provided in the embodiments of this application may be a transmission processing apparatus. An example in which a transmission processing apparatus executes the transmission processing method is used in the embodiments of this application to describe the transmission processing apparatus provided in the embodiments of this application.

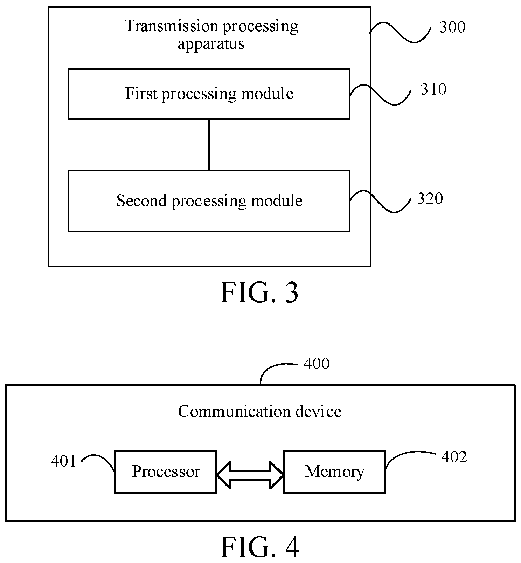

As shown in FIG. 3, a transmission processing apparatus 300 according to an embodiment of this application is provided, including:

a first processing module 310, configured to determine, according to resource configuration information, a first time-frequency resource for a first physical channel transmission; and

a second processing module 320, configured to perform the first physical channel transmission according to whether a resource element RE in the first time-frequency resource is valid.

Optionally, the second processing module is further configured to:
determine that the first physical channel transmission is invalid in a case that at least one invalid RE exists in the first time-frequency resource, or a quantity of invalid REs in the first time-frequency resource is greater than or equal to a first threshold, or a ratio of the invalid REs in the first time-frequency resource is greater than or equal to a second threshold.

Optionally, the second processing module is further configured to:

use an available resource meeting a preset condition as a second time-frequency resource in a case that at least one valid RE exists in the first time-frequency resource, where the available resource is a set or a subset of the at least one valid RE; and
the second processing module performs the first physical channel transmission on the second time-frequency resource.

Optionally, the preset condition includes at least one of the following:

a first condition corresponding to a frequency domain resource;
a second condition corresponding to a time domain resource; and
a third condition corresponding to a time-frequency domain resource.

Optionally, the first condition includes at least one of the following:

occupied bandwidths are consecutive in frequency domain;
a quantity of occupied consecutive physical resource blocks PRBs is a third threshold;
a quantity of occupied PRBs is greater than or equal to a fourth threshold; and
a ratio of the occupied PRBs to PRBs occupied by the first time-frequency resource is greater than or equal to a fifth threshold.

Optionally, the second condition includes at least one of the following:

occupied symbols are consecutive in time domain;
the occupied symbols include all or at least N demodulation reference signals DMRSs, where N is an integer greater than or equal to 0;
a quantity of the occupied symbols is greater than or equal to a sixth threshold; and
a ratio of the occupied symbols to symbols occupied by the first time-frequency resource is greater than or equal to a seventh threshold.

Optionally, the third condition includes at least one of the following:

a quantity of occupied REs is greater than or equal to an eighth threshold; and
a ratio of the occupied REs to REs occupied by the first time-frequency resource is greater than or equal to a ninth threshold.

Optionally, the second processing module is further configured to:

prune the first time-frequency resource according to a preset rule in a case that at least one invalid RE exists in the first time-frequency resource, to obtain the second time-frequency resource, where
the preset rule includes at least one of the following:

deleting a symbol including the invalid RE; and
deleting a PRB including the invalid RE.

Optionally, the second processing module is further configured to:

determine a transmission attribute of the first physical channel transmission; and
perform the first physical channel transmission based on the transmission attribute, where
the transmission attribute includes at least one of the following:

a modulation and coding scheme MCS index;
a redundancy version RV; and
a transport block TB size.

Optionally, the second processing module is further configured to:

in a case that the transmission attribute includes the RV, perform:
using an RV in the resource configuration information as an RV of the first physical channel transmission; or
using an RV predefined in a specification or configured by higher layer signaling as the RV of the first physical channel transmission.

Optionally, the second processing module is further configured to:

in a case that the transmission attribute includes the TB size and the first physical channel transmission is used for carrying an initial transmission of data, determine the TB size corresponding to the first physical channel transmission based on a target item, where the target item includes at least one of the following: a quantity of PRBs, a quantity of symbols, and the MCS index, where the quantity of PRBs or the quantity of symbols corresponds to the available resource or is indicated by the resource configuration information; and the MCS index is determined by the first device based on a first operation; or

in a case that repetition transmissions exist in a transmission occasion corresponding to the first physical channel transmission, determining the TB size corresponding to the first physical channel transmission includes any one of the following:

> using a TB size indicated by the resource configuration information as the TB size corresponding to the first physical channel transmission; or
> determining the TB size corresponding to the first physical channel transmission based on a quantity of PRBs and a quantity of symbols corresponding to a target available resource and the MCS index determined by the first device based on the first operation, where
> the target available resource is an available resource corresponding to a target repetition transmission among performable repetition transmissions in the transmission occasion.

Optionally, the second processing module is further configured to:
in a case that repetition transmissions exist in the transmission occasion corresponding to the first physical channel transmission, adjust the TB size corresponding to the first physical channel transmission based on a quantity of the performable repetition transmissions in the transmission occasion or a ratio of the quantity of the performable repetition transmissions in the transmission occasion to a quantity of repetition transmissions configured in the transmission occasion.

Optionally, the second processing module is further configured to:
in a case that the transmission attribute includes the TB size and the first physical channel transmission is used for carrying a retransmission of data, use a TB size corresponding to the initial transmission of the data as the TB size corresponding to the first physical channel transmission.

Optionally, the second processing module is further configured to: in a case that the transmission attribute includes the MCS index and the first physical channel is used for carrying an initial transmission of data, perform:

using an MCS index in the resource configuration information as an MCS index of the first physical channel transmission; or
determining the MCS index of the first physical channel transmission based on the MCS index in the resource configuration information, and an MCS offset.

Optionally, the second processing module is further configured to:
in a case that the transmission attribute includes the MCS index, the first physical channel transmission is used for carrying a retransmission of data, and the resource configuration information indicates a first normal MCS level, perform any one of the following:

> expecting that a TB size obtained based on a quantity of PRBs and a quantity of symbols corresponding to the available resource and a target MCS index to be the same as a TB size corresponding to initial transmission of the data, where the target MCS index corresponds to the first normal MCS level or is determined according to an MCS index corresponding to the first normal MCS level and an MCS offset;
> using a first reserved MCS index as an MCS index of the first physical channel transmission, where a modulation order corresponding to the first reserved MCS index is the same as a modulation order corresponding to the first normal MCS level; or
> using a second reserved MCS index as the MCS index of the first physical channel transmission, where a modulation order corresponding to the second reserved MCS index is the same as a modulation order corresponding to a second normal MCS level, and the second normal MCS level is determined based on the first normal MCS level and the MCS offset.

Optionally, the first processing module is further configured to:

> determine a time-frequency resource indicated by the resource configuration information as the first time-frequency resource; or
> adjust, based on a type of a time domain unit in which the first physical channel transmission is located, the time-frequency resource indicated by the resource configuration information, to obtain the first time-frequency resource.

Optionally, the time-frequency resource indicated by the resource configuration information is applied to a first type of time domain units, and a time-frequency resource corresponding to another type of time domain units is adjusted based on the time-frequency resource indicated by the resource configuration information, where the first type of time domain units is a single type of time domain units, and the another type of time domain units is any type of time domain units other than the first type of time domain units; and
the first processing module is further configured to:

> if the type of the time domain unit in which the first physical channel transmission is located is the first type of time domain units, determine the time-frequency resource indicated by the resource configuration information as the first time-frequency resource; and
> if the type of the time domain unit in which the first physical channel transmission is located is the another type of time domain units, adjust, based on a first resource offset, the time-frequency resource indicated by the resource configuration information, to obtain the first time-frequency resource.

Optionally, a time-frequency resource corresponding to a second type of time domain units is adjusted based on the time-frequency resource indicated by the resource configuration information, where the second type of time domain units is any type of time domain units; and
the first processing module is further configured to:
adjust, based on a second resource offset, the time-frequency resource indicated by the resource configuration information, to obtain the first time-frequency resource, where the second resource offset corresponds to the type of the time domain unit in which the first physical channel transmission is located.

Optionally, the apparatus further includes:
a third processing module, configured to adjust a transmission attribute of the first physical channel transmission based on a type of a time domain unit in which the first physical channel transmission is located.

Optionally, a transmission attribute indicated by the resource configuration information is applied to a third type of time domain units, and a transmission attribute corresponding to another type of time domain units is adjusted based on the transmission attribute indicated by the resource configuration information, where the third type of time domain units is a single type of time domain units, and the another type of time domain units is any type of time domain units other than the third type of time domain units; and
the third processing module is further configured to:

> if the type of the time domain unit in which the first physical channel transmission is located is the third type of time domain units, determine the transmission attribute indicated by the resource configuration information as the transmission attribute of the first physical channel transmission; and
> if the type of the time domain unit in which the first physical channel transmission is located is the another type of time domain units, adjust, based on a first attribute offset, the transmission attribute indicated by the resource configuration information, and use an adjusted transmission attribute as the transmission attribute of the first physical channel transmission.

Optionally, a time-frequency resource corresponding to a fourth time domain unit type is adjusted based on a time-frequency resource indicated by the resource configuration information, where the fourth time domain unit type is any time domain unit type; and
the third processing module is further configured to:
adjust, based on a second attribute offset, a transmission attribute indicated by the resource configuration information, and use an adjusted transmission attribute as the transmission attribute of the first physical channel transmission, where the second attribute offset corresponds to the type of the time domain unit in which the first physical channel transmission is located.

Optionally, the apparatus further includes:

> a fourth processing module, configured to determine, if at least two physical channel transmissions need to be performed within a slot, based on a first rule, a target physical channel transmission to be performed, where
> the first rule includes at least one of the following:
>
>> excluding an invalid physical channel transmission;
>> excluding a physical channel transmission whose corresponding available resource does not meet a preset condition;
>> for second physical channel transmissions overlapping in time domain, only performing a physical channel transmission corresponding to target resource configuration information;
>> for physical channel transmissions overlapping in time domain, only performing a physical channel transmission that is dynamically scheduled;
>> for physical channel transmissions overlapping in time domain, only performing a physical channel transmission whose all corresponding REs are valid;
>> in a case that a quantity of valid physical channel transmissions within the slot is greater than a first threshold, sequentially excluding each physical channel transmission with a low priority based on a first priority sequence until a quantity of physical channel transmissions expected to be performed within the slot does not exceed the first threshold, where the first priority sequence includes: a transmission priority of a physical channel transmission that is dynamically scheduled is higher than that of a physical channel transmission that is semi-statically configured, and/or a transmission priority of a physical channel transmission that corresponds to a configuration index N1 and is semi-statically configured is higher than a transmission priority of a physical channel transmission that corresponds to a configuration index N2 and is semi-statically configured, where N1 is an integer greater than or equal to 0, N2 is an integer greater than or equal to 0, and N1 is less than or greater than N2; and

in a case that the quantity of the valid physical channel transmissions within the slot is greater than the first threshold, sequentially excluding each physical channel transmission with a low priority based on a second priority sequence until the quantity of the physical channel transmissions expected to be performed within the slot does not exceed the first threshold, where the second priority sequence includes: a transmission priority of a physical channel transmission whose all REs are valid is higher than a transmission priority of a physical channel transmission whose at least one RE is invalid.

Optionally, if the first physical channel transmission is uplink transmission, the type of the time domain unit includes first type of time domain units and/or second type of time domain units; and the first type of time domain units is any time domain unit having available uplink resources in the range of an uplink bandwidth part BWP, and the second type of time domain units is any time domain unit having available uplink resources only in the range of an uplink sub-band; and/or

if the first physical channel transmission is downlink transmission, the type of the time domain unit includes a third type of time domain units and/or a fourth type of time domain units; and the third type of time domain units is any time domain unit having available downlink resources in the range of a downlink BWP, and the fourth type of time domain units is any time domain unit having available downlink resources only in the range of a downlink sub-band.

Optionally, the first type of time domain units includes at least one of the following:

semi-static Semi-static uplink time domain units; and first semi-static flexible time domain units, where in a first semi-static flexible time domain unit, all the frequency domain ranges corresponding to the uplink BWP is usable as the available uplink resources; and/or the second type of time domain units includes at least one of the following:

semi-static downlink time domain units; and second semi-static flexible time domain units, where in a second semi-static flexible time domain unit, only the frequency domain range corresponding to the uplink sub-band is usable as the available uplink resources; and/or

the third type of time domain units includes at least one of the following:

semi-static downlink time domain units; and third semi-static flexible time domain units, where in a third Semi-static flexible time domain unit, all the frequency domain ranges corresponding to the downlink BWP is usable as the available downlink resources; and/or the fourth type of time domain units includes at least one of the following:

semi-static uplink time domain units; and fourth semi-static flexible time domain units, where in a fourth semi-static flexible time domain unit, only the frequency domain range corresponding to the downlink sub-band is usable as the available downlink resources.

The transmission processing apparatus in the embodiments of this application may be an electronic device, for example, an electronic device having an operating system, or may be a component in the electronic device, for example, an integrated circuit or a chip. The electronic device may be a terminal, a base station, or another device other than the terminal. For example, the terminal may include, but not limited to, the types of the terminal 11 listed above, and the another device may be a server, a network attached storage (Network Attached Storage, NAS), or the like. This is not specifically limited in the embodiments of this application.

The transmission processing apparatus provided in the embodiments of this application can implement the processes implemented in the method embodiment of FIG. 2 and achieve the same technical effects. To avoid repetition, details are not described herein.

Optionally, as shown in FIG. 4, an embodiment of this application further provides a communication device 400, including a processor 401 and a memory 402, where the memory 402 stores a program or an instruction executable on the processor 401. For example, when the communication device 400 is a terminal or a network side device, when the program or the instruction is executed by the processor 401, the steps of the transmission processing method embodiments are implemented, and the same technical effects can be achieved. To avoid repetition, details are not described herein.

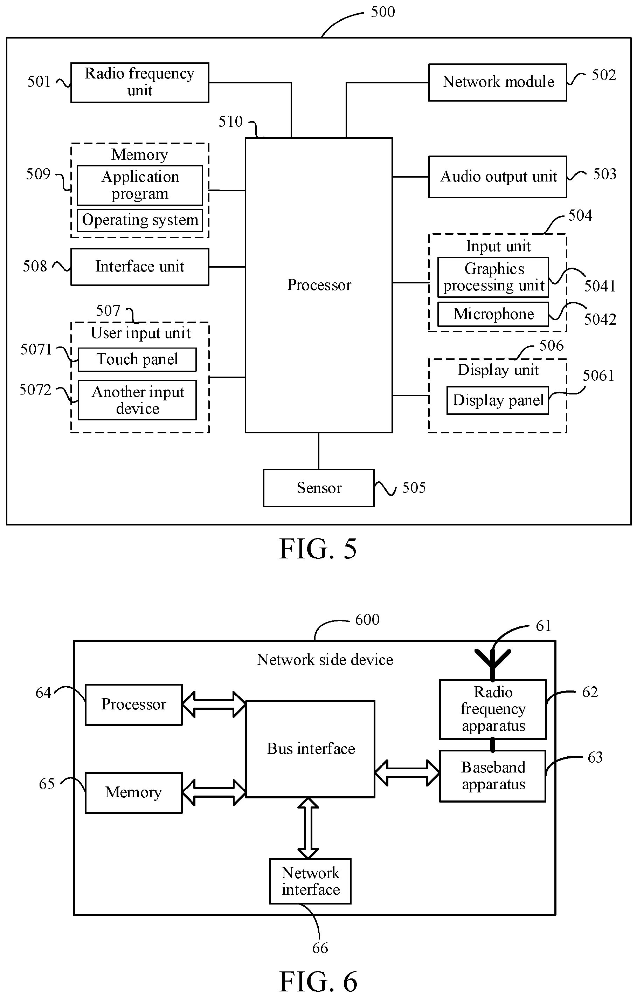

An embodiment of this application further provides a terminal, including a processor and a communication interface, where the processor is configured to: determine, according to resource configuration information, a first time-frequency resource for a first physical channel transmission; and perform the first physical channel transmission according to whether a resource element RE in the first time-frequency resource is valid; and the communication interface is configured to perform receiving and sending. The terminal embodiment corresponds to the foregoing method embodiments of the first device side, so that the implementation processes and the implementations of the foregoing method embodiments may all be applied to the terminal embodiment, and the same technical effects can be achieved. Specifically, FIG. 5 is a schematic structural diagram of hardware of a terminal implementing various embodiments of this application.

The terminal 500 includes, but is not limited to, at least some components of a radio frequency unit 501, a network module 502, an audio output unit 503, an input unit 504, a sensor 505, a display unit 506, a user input unit 507, an interface unit 508, a memory 509 and a processor 510.

A person skilled in the art may understand that the terminal 500 may further include a power supply (such as a battery) for supplying power to the components. The power supply may be logically connected to the processor 510 by a power management system, thereby implementing functions such as charging, discharging, and power consumption management by using the power management system. The terminal structure shown in FIG. 5 does not constitute a limitation on the terminal, and the terminal may include more or fewer components than those shown in the figure, or some components may be combined, or a different component deployment may be used.

It should be understood that, in the embodiments of this application, the input unit 504 may include a graphics processing unit (Graphics Processing Unit, Graphics Processing Unit) 5041 and a microphone 5042. The graphics processing unit 5041 performs processing on image data of a static picture or a video that is obtained by an image acquisition device (for example, a camera) in a video acquisition mode or an image acquisition mode. The display unit 506 may include a display panel 5061. The display panel 5061 may be configured in the form of a liquid crystal display, an organic light-emitting diode, or the like. The user input unit 507 includes at least one of a touch panel 5071 and another input device 5072. The touch panel 5071 is also referred to as a touch screen. The touch panel 5071 may include two parts: a touch detection apparatus and a touch controller. The another input device 5072 may include, but not limited to, a physical keyboard, a functional key (such as a volume control key or a switch key), a track ball, a mouse, and a joystick, which are not described herein in detail.

In the embodiments of this application, after receiving downlink data from a network side device, the radio frequency unit 501 sends the downlink data to the processor 510 for processing. In addition, the radio frequency unit 501 sends uplink data to the network side device. Generally, the radio frequency unit 501 includes, but is not limited to, an antenna, an amplifier, a transceiver, a coupler, a low noise amplifier, a duplexer, and the like.

The memory 509 may be configured to store a software program or an instruction and various data. The memory 509 may mainly include a first storage region storing the program or the instruction and a second storage region storing the data. The first storage region may store an operating system, an application program or an instruction required by at least one function (for example, a sound playback function and an image display function), and the like. In addition, the memory 509 may include a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 509 in the embodiments of this application includes, but is not limited to, these memories and any other memory of a suitable type.

The processor 510 may include one or more processing units. Optionally, the processor 510 integrates an application processor and a modem processor, where the application processor mainly processes operations involving an operating system, a user interface, an application program, and the like, and the modem processor mainly processes a wireless communication signal, for example, a baseband processor. It may be understood that, the modem processor may not be integrated into the processor 510.

The processor 510 is configured to determine, according to resource configuration information, a first time-frequency resource for a first physical channel transmission; and perform the first physical channel transmission according to whether a resource element RE in the first time-frequency resource is valid.

An embodiment of this application further provides a network side device, including a processor and a communication interface, where the processor is configured to: determine, according to resource configuration information, a first time-frequency resource for a first physical channel transmission; and perform the first physical channel transmission according to whether a resource element RE in the first time-frequency resource is valid. The network side device embodiment corresponds to the foregoing method embodiments of the first device, so that the implementation processes and the implementations of the foregoing method embodiments may all be applied to the network side device embodiment, and the same technical effects can be achieved.

Specifically, an embodiment of this application further provides a network side device. As shown in FIG. 6, the network side device 600 includes: an antenna 61, a radio frequency apparatus 62, a baseband apparatus 63, a processor 64, and a memory 65. The antenna 61 is connected to the radio frequency apparatus 62. In an uplink direction, the radio frequency apparatus 62 receives information through the antenna 61, and sends the received information to the baseband apparatus 63 for processing. In a downlink direction, the baseband apparatus 63 processes to-be-sent information and sends the to-be-sent information to the radio frequency apparatus 62, and the radio frequency apparatus 62 processes the received information and sends the information out through the antenna 61.

The method performed by the network side device in the foregoing embodiments may be implemented in the baseband apparatus 63, and the baseband apparatus 63 includes a baseband processor.

For example, the baseband apparatus 63 may include at least one baseband plate, and a plurality of chips are arranged on the baseband plate. As shown in FIG. 6, one of the chips is, for example, a baseband processor, and is connected to the memory 65 through a bus interface, to invoke a program in the memory 65 to perform the operations of the network side shown in the foregoing method embodiments.

The network side device may further include a network interface 66, and the interface is, for example, a common public radio interface (common public radio interface, CPRI).

Specifically, the network side device 600 in the embodiments of the present invention further includes an instruction or a program stored in the memory 65 and executable on the processor 64, and the processor 64 invokes the instruction or the program in the memory 65 to perform the method performed by the modules in FIG. 6 and achieves the same technical effects. To avoid repetition, details are not described herein.

An embodiment of this application further provides a readable storage medium, having a program or an instruction stored therein, where when the program or the instruction is executed by a processor, the processes of the transmission processing method embodiments are implemented, and the same technical effects can be achieved. To avoid repetition, details are not described herein.

The processor is the processor in the terminal described in the foregoing embodiments. The readable storage medium includes a computer-readable storage medium, for example, a computer read-only memory ROM, a random access memory RAM, a magnetic disk, an optical disc, or the like.

An embodiment of this application further provides a chip. The chip includes a processor and a communication interface, the communication interface is coupled to the processor, and the processor is configured to execute a program or an instruction, to implement the processes of the transmission processing method embodiments, and the same technical effects can be achieved. To avoid repetition, details are not described herein.

It should be understood that, the chip provided in the embodiments of this application may also be referred to as a system-level chip, a system chip, a chip system, a system on chip, or the like.

An embodiment of this application further provides a computer program/program product, the computer program/program product being stored in a storage medium, where when the computer program/program product is executed by at least one processor, the processes of the transmission processing method embodiments are implemented, and the same technical effects can be achieved. To avoid repetition, details are not described herein.

An embodiment of this application further provides a communication system, including a terminal and a network side device, where the terminal may be configured to perform the steps of the transmission processing method described above, and the network side device may be configured to perform the steps of the transmission processing method described above.

It should be noted that, the term "include", "comprise", or any other variant thereof in this specification is intended to cover non-exclusive inclusion, so that a process, a method, an object, or an apparatus that includes a series of elements not only includes the elements, but also includes other elements that are not expressly listed, or may further include elements that are inherent to the process, the method, the object, or the apparatus. Without more limitations, an element defined by a sentence "including one......" does not exclude existence of other same elements in the process, the method, the object, or the apparatus that includes the element. In addition, it should be noted that a scope of the method and the apparatus in the implementations of this application is not limited to performing functions according to a sequence that is shown or discussed, but may further include performing functions in a substantially simultaneous manner or in a reversed sequence according to the functions involved. For example, the described method may be performed in a different order than a described order, and various steps may be added, omitted, or combined. In addition, features described with reference to some examples may be combined in other examples.

Through the description of the foregoing implementations, a person skilled in the art may clearly understand that the method according to the foregoing embodiments may be implemented by software and a necessary general hardware platform, and certainly, may alternatively be implemented by hardware, but in many cases, the former manner is a better implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the specific implementations described above, and the specific implementations described above are only exemplary and not limitative. A person of ordinary skill in the art may make various variations under the teaching of this application without departing from the spirit of this application and the protection scope of the claims, and such variations shall all fall within the protection scope of this application.

**Claims**

1. A transmission processing method, comprising:

   determining, by a first device according to resource configuration information, a first time-frequency resource for a first physical channel transmissiona first time-frequency resource for a first physical channel transmission; and
   performing, by the first device, the first physical channel transmission transmission according to whether a resource element RE in the first time-frequency resource is valid.

2. The method according to claim 1, wherein the performing, by the first device, the first physical channel transmissionthe first physical channel transmission according to whether a resource element RE in the first time-frequency resource is valid comprises:
   determining, by the first device, that the first physical channel transmission is invalid in a case that at least one invalid RE exists in the first time-frequency resource, or a quantity of invalid REs in the first time-frequency resource is greater than or equal to a first threshold, or a ratio of the invalid REs in the first time-frequency resource is greater than or equal to a second threshold.

3. The method according to claim 1, wherein the performing, by the first device, the first physical channel transmissionthe first physical channel transmission according to whether a resource element RE in the first time-frequency resource is valid comprises:

   using, by the first device, an available resource meeting a preset condition as a second time-frequency resource in a case that at least one valid RE exists in the first time-frequency resource, wherein the available resource is a set or a subset of the at least one valid RE; and
   performing, by the first device, the first physical channel transmissionthe first physical channel transmission on the second time-frequency resource.

4. The method according to claim 3, wherein the preset condition comprises at least one of the following:

   a first condition corresponding to a frequency domain resource;
   a second condition corresponding to a time domain resource; and
   a third condition corresponding to a time-frequency domain resource.

5. The method according to claim 4, wherein the first condition comprises at least one of the following:

   occupied bandwidths are consecutive in frequency domain;
   a quantity of occupied consecutive physical resource blocks PRBs is a third threshold;
   a quantity of occupied PRBs is greater than or equal to a fourth threshold; and
   a ratio of the occupied PRBs to PRBs occupied by the first time-frequency resource is greater than or equal to a fifth threshold.

6. The method according to claim 4, wherein the second condition comprises at least one of the following:

   occupied symbols are consecutive in time domain;
   the occupied symbols comprise all or at least N demodulation reference signals DMRSs, wherein N is an integer greater than or equal to 0;
   a quantity of the occupied symbols is greater than or equal to a sixth threshold; and
   a ratio of the occupied symbols to symbols occupied by the first time-frequency resource is greater than or equal to a seventh threshold.

7. The method according to claim 4, wherein the third condition comprises at least one of the following:

   a quantity of occupied REs is greater than or equal to an eighth threshold; and
   a ratio of the occupied REs to REs occupied by the first time-frequency resource is greater than or equal to a ninth threshold.

**8.** The method according to claim 3, wherein the using, by the first device, an available resource meeting a preset condition as a second time-frequency resource comprises:

pruning the first time-frequency resource according to a preset rule in a case that at least one invalid RE exists in the first time-frequency resource, to obtain the second time-frequency resource, wherein
the preset rule comprises at least one of the following:

deleting a symbol comprising the invalid RE; and
deleting a PRB comprising the invalid RE.

**9.** The method according to claim 3, wherein the performing, by the first device, the first physical channel transmissionthe first physical channel transmission on the second time-frequency resource comprises:

determining, by the first device, a transmission attribute of the first physical channel transmissionthe first physical channel transmission; and
performing, by the first device, the first physical channel transmissionthe first physical channel transmission based on the transmission attribute, wherein
the transmission attribute comprises at least one of the following:

a modulation and coding scheme MCS index;
a redundancy version RV; and
a transport block TB size.

**10.** The method according to claim 9, wherein the determining, by the first device, a transmission attribute of the first physical channel transmissionthe first physical channel transmission comprises:
in a case that the transmission attribute comprises the RV, performing, by the first device:

using an RV in the resource configuration information as an RV of the first physical channel transmission; or
using an RV predefined in a specification or configured by higher layer signaling as the RV of the first physical channel transmissionthe first physical channel transmission.

**11.** The method according to claim 9, wherein the determining, by the first device, a transmission attribute of the first physical channel transmissionthe first physical channel transmission comprises:

in a case that the transmission attribute comprises the TB size and the first physical channel transmissionthe first physical channel transmission is used for carrying an initial transmission of data,
determining, by the first device, the TB size corresponding to the first physical channel transmission based on a target item, wherein the target item comprises at least one of the following: a quantity of PRBs, a quantity of symbols, and the MCS index, wherein the quantity of PRBs or the quantity of symbols corresponds to the available resource or is indicated by the resource configuration information; and the MCS index is determined by the first device based on a first operation; or
in a case that the first device performs repetition transmissions in a transmission occasion corresponding to the first physical channel transmission, the determining the TB size corresponding to the first physical channel transmission comprises any one of the following:

using a TB size indicated by the resource configuration information as the TB size corresponding to the first physical channel transmission; or
determining the TB size corresponding to the first physical channel transmission based on a quantity of PRBs and a quantity of symbols corresponding to a target available resource and the MCS index determined by the first device based on the first operation, wherein
the target available resource is an available resource corresponding to a target repetition transmission among performable repetition transmissions in the transmission occasion.

**12.** The method according to claim 11, wherein after the determining, by the first device, the TB size corresponding to the first physical channel transmission, the method further comprises:
in a case that the first device performs repetition transmissions in the transmission occasion corresponding to the first physical channel transmission, adjusting the TB size corresponding to the first physical channel transmission based on a quantity of the performable repetition transmissions in the transmission occasion or a ratio of the quantity of the performable repetition transmissions in the transmission occasion to a quantity of repetition transmissions configured in the transmission occasion.

**13.** The method according to claim 9, wherein the determining, by the first device, a transmission attribute of the first physical channel transmission comprises:
in a case that the transmission attribute comprises the TB size and the first physical channel transmission is used for carrying a retransmission of data, using, by the first device, a TB size corresponding to the initial transmission of the data as the TB size corresponding to the first physical channel transmission.

14. The method according to claim 9, wherein the determining, by the first device, a transmission attribute of the first physical channel transmission comprises: in a case that the transmission attribute comprises the MCS index and the first physical channel transmission is used for carrying an initial transmission of data, performing, by the first device:

using an MCS index in the resource configuration information as an MCS index of the first physical channel transmission; or determining the MCS index of the first physical channel transmission based on the MCS index in the resource configuration information, and an MCS offset.

15. The method according to claim 9, wherein the determining, by the first device, a transmission attribute of the first physical channel transmission comprises: in a case that the transmission attribute comprises the MCS index, the first physical channel transmission is used for carrying a retransmission of data, and the resource configuration information indicates a first normal MCS level, performing, by the first device, any one of the following:

expecting that a TB size obtained based on a quantity of PRBs and a quantity of symbols corresponding to the available resource and a target MCS index to be the same as a TB size corresponding to the initial transmission of the data, wherein the target MCS index corresponds to the first normal MCS level or is determined according to an MCS index corresponding to the first normal MCS level and an MCS offset; using a first reserved MCS index as an MCS index of the first physical channel transmission, wherein a modulation order corresponding to the first reserved MCS index is the same as a modulation order corresponding to the first normal MCS level; or using a second reserved MCS index as the MCS index of the first physical channel transmission, wherein a modulation order corresponding to the second reserved MCS index is the same as a modulation order corresponding to a second normal MCS level, and the second normal MCS level is determined based on the first normal MCS level and the MCS offset.

16. The method according to claim 1, wherein the determining, by a first device according to resource configuration information, a first time-frequency resource for a first physical channel transmission comprises:

determining, by the first device, a time-frequency resource indicated by the resource configuration information as the first time-frequency resource; or adjusting, by the first device based on a type of a time domain unit in which the first physical channel transmission is located, the time-frequency resource indicated by the resource configuration information, to obtain the first time-frequency resource.

17. The method according to claim 16, wherein the time-frequency resource indicated by the resource configuration information is applied to a first type of time domain units, and a time-frequency resource corresponding to another type of time domain units is adjusted based on the time-frequency resource indicated by the resource configuration information, wherein the first type of time domain units is a single type of time domain units, and the another type of time domain units is any type of time domain units other than the first type of time domain units; and the adjusting, by the first device based on a type of a time domain unit in which the first physical channel transmission is located, the time-frequency resource indicated by the resource configuration information comprises:

if the type of the time domain unit in which the first physical channel transmission is located is the first type of time domain units, determining, by the first device, the time-frequency resource indicated by the resource configuration information as the first time-frequency resource; and if the type of the time domain unit in which the first physical channel transmission is located is the another type of time domain units, adjusting, by the first device based on a first resource offset, the time-frequency resource indicated by the resource configuration information, to obtain the first time-frequency resource.

18. The method according to claim 16, wherein a time-frequency resource corresponding to second type of time domain units is adjusted based on the time-frequency resource indicated by the resource configuration information, wherein the second type of time domain units is any type of time domain units; and the adjusting, by the first device based on a type of a time domain unit in which the first physical channel transmission is located, the time-frequency resource indicated by the resource configuration information comprises:

adjusting, by the first device based on a second resource offset, the time-frequency resource indicated by the resource configuration information, to obtain the first time-frequency resource, wherein the second resource offset corresponds to the type of the time domain unit in which the first physical channel transmission is located.

19. The method according to claim 1, wherein after the determining, by a first device according to resource configuration information, a first time-frequency resource for a first physical channel transmission, the method further comprises:
adjusting, by the first device, a transmission attribute of the first physical channel transmission based on a type of a time domain unit in which the first physical channel transmission is located.

20. The method according to claim 19, wherein a transmission attribute indicated by the resource configuration information is applied to a third type of time domain units, and a transmission attribute corresponding to another type of time domain units is adjusted based on the transmission attribute indicated by the resource configuration information, wherein the third type of time domain units is a single type of time domain units, and the another type of time domain units is any type of time domain units other than the third type of time domain units; and the adjusting, by the first device, a transmission attribute of the first physical channel transmission based on a type of a time domain unit in which the first physical channel transmission is located comprises:

if the type of the time domain unit in which the first physical channel transmission is located is the third type of time domain units, determining, by the first device, the transmission attribute indicated by the resource configuration information as the transmission attribute of the first physical channel transmission; and
if the type of the time domain unit in which the first physical channel transmission is located is the another type of time domain units, adjusting, by the first device based on a first attribute offset, the transmission attribute indicated by the resource configuration information, and using an adjusted transmission attribute as the transmission attribute of the first physical channel transmission.

21. The method according to claim 19, wherein a time-frequency resource corresponding to a fourth time domain unit type is adjusted based on a time-frequency resource indicated by the resource configuration information, wherein the fourth time domain unit type is any time domain unit type; and

the adjusting, by the first device, a transmission attribute of the first physical channel transmission based on a type of a time domain unit in which the first physical channel transmission is located comprises:
adjusting, by the first device based on a second attribute offset, a transmission attribute indicated by the resource configuration information, and using an adjusted transmission attribute as the transmission attribute of the first physical channel transmission, wherein the second attribute offset corresponds to the type of the time domain unit in which the first physical channel transmission is located.

22. The method according to claim 1, wherein before the performing, by the first device, the first physical channel transmission according to whether a resource element RE in the first time-frequency resource is valid, the method further comprises:

if at least two physical channel transmissions need to be performed within a slot, determining, by the first device based on a first rule, a target physical channel transmission to be performed, wherein
the first rule comprises at least one of the following:

excluding an invalid physical channel transmission;
excluding a physical channel transmission whose corresponding available resource does not meet a preset condition;
for second physical channel transmissions overlapping in time domain, only performing a physical channel transmission corresponding to target resource configuration information;
for physical channel transmissions overlapping in time domain, only performing a physical channel transmission that is dynamically scheduled;
for physical channel transmissions overlapping in time domain, only performing a physical channel transmission whose all corresponding REs are valid;
in a case that a quantity of valid physical channel transmissions within the slot is greater than a first threshold, sequentially excluding each physical channel transmission with a low priority based on a first priority sequence until a quantity of physical channel transmissions expected to be performed within the slot does not exceed the first threshold, wherein the first priority sequence comprises: a transmission priority of a physical channel transmission that is dynamically scheduled is higher than that of a physical channel transmission that is semi-statically configured, and/or a transmission priority of a physical channel transmission that corresponds to a configuration index N1 and is semi-statically configured is higher than a transmission priority of a physical channel transmission that corresponds to a configuration index N2 and is semi-statically configured, wherein N1 is an integer greater than or equal to 0, N2 is an integer greater than or equal to 0, and N1 is less than or greater than N2; and
in a case that the quantity of the valid physical channel transmissions within the slot is greater than the first threshold, sequentially excluding each physical channel transmission with a low priority based on a second priority sequence until the quantity of the physical channel transmissions expected to be performed within the slot does not exceed the first threshold, wherein the second priority sequence comprises: a transmission priority of a physical channel transmission whose all REs are valid is higher than a transmission priority of a physical channel transmission whose at least one RE is invalid.

23. The method according to claim 16, wherein if the first physical channel transmission is an uplink transmission, the type of the time domain unit comprises a first type of time domain units and/or a second type of time domain units; and the first type of time domain units is any time domain unit having available uplink resources in the range of an uplink bandwidth part BWP, and the second type of time domain units is any time domain unit having available uplink resources only in the range of an uplink sub-band;
and/or
if the first physical channel transmission is a downlink transmission, the type of the time domain unit comprises a third type of time domain units and/or a fourth type of time domain units; and the third type of time domain units is any time domain unit having available downlink resources in the range of a downlink BWP, and the fourth type of time domain units is any time domain unit having available downlink resources only in the range of a downlink sub-band.

24. The method according to claim 23, wherein the first type of time domain units comprises at least one of the following:

semi-static Semi-static uplink time domain units; and
first semi-static flexible time domain units, wherein in a first semi-static flexible time domain unit, all the frequency domain range corresponding to the uplink BWP is usable as the available uplink resources;
and/or
the second type of time domain units comprises at least one of the following:

semi-static downlink time domain units; and second semi-static flexible time domain units, wherein in a second semi-static flexible time domain unit, only the frequency domain range corresponding to the uplink sub-band is usable as the available uplink resources;
and/or
the third type of time domain units comprises at least one of the following:

semi-static downlink time domain units; and
third semi-static flexible time domain units, wherein in a third semi-static flexible time domain unit, all the frequency domain range corresponding to the downlink BWP is usable as the available downlink resources;
and/or
the fourth type of time domain units comprises at least one of the following:

semi-static uplink time domain units; and
fourth semi-static flexible time domain units, wherein in a fourth semi-static flexible time domain unit, only the frequency domain range corresponding to the downlink sub-band is usable as the available downlink resources.

25. A transmission processing apparatus, comprising:

a first processing module, configured to determine, according to resource configuration information, a first time-frequency resource for a first physical channel transmission; and
a second processing module, configured to perform the first physical channel transmission according to whether a resource element RE in the first time-frequency resource is valid.

26. The apparatus according to claim 25, wherein the second processing module is further configured to:
determine that the first physical channel transmission is invalid in a case that at least one invalid RE exists in the first time-frequency resource, or a quantity of invalid REs in the first time-frequency resource is greater than or equal to a first threshold, or a ratio of the invalid REs in the first time-frequency resource is greater than or equal to a second threshold.

**27.** The apparatus according to claim 25, wherein the second processing module is further configured to:

use an available resource meeting a preset condition as a second time-frequency resource in a case that at least one valid RE exists in the first time-frequency resource, wherein the available resource is a set or a subset of the at least one valid RE; and
perform the first physical channel transmission on the second time-frequency resource.

**28.** A communication device, comprising a processor and a memory, wherein the memory stores a program or an instruction executable on the processor, and when the program or the instruction is executed by the processor, the steps of the transmission processing method according to any one of claims 1 to 24 are implemented.

**29.** A readable storage medium, having a program or an instruction stored therein, wherein when the program or the instruction is executed by a processor, the steps of the transmission processing method according to any one of claims 1 to 24 are implemented.

Network side
device

11

11

Terminal

Terminal

FIG. 1

Start

A first device determines, according to resource
configuration information, a first time-frequency resource
for a first physical channel trasnsmission

201

The first device performs the first physical channel
transmission according to whether a resource element RE
in the first time-frequency resource is valid

202

End

FIG. 2

```
┌─────────────────────────────────────────────────┐
│     Transmission processing              ⌇⌇ 300  │
│         apparatus                                │
│   ┌─────────────────────────────┐                │
│   │   First processing module   │        ⌇⌇ 310  │
│   └──────────────┬──────────────┘                │
│                  │                               │
│   ┌──────────────┴──────────────┐                │
│   │  Second processing module   │        ⌇⌇ 320  │
│   └─────────────────────────────┘                │
└─────────────────────────────────────────────────┘
```

FIG. 3

```
                                        ⌒ 400
┌─────────────────────────────────────────────────┐
│            Communication device                  │
│                                                  │
│  401 ⌒  ┌───────────┐     ┌──────────┐ ⌒ 402     │
│         │ Processor  │◁══▷│  Memory   │          │
│         └───────────┘     └──────────┘           │
└─────────────────────────────────────────────────┘
```

FIG. 4

500

| Radio frequency unit 501 | | Processor 510 | | Network module 502 |

Memory 509
Application program
Operating system

Interface unit 508

User input unit 507
Touch panel 5071
Another input device 5072

Processor

Network module 502

Audio output unit 503

Input unit 504
Graphics processing unit 5041
Microphone 5042

Display unit 506
Display panel 5061

Sensor 505

**FIG. 5**

600

Network side device

61

Processor 64

Bus interface

Radio frequency apparatus 62

Memory 65

Baseband apparatus 63

Network interface

66

**FIG. 6**

FIG. 7

## INTERNATIONAL SEARCH REPORT

| International application No. |
| --- |
| **PCT/CN2023/107715** |

### A. CLASSIFICATION OF SUBJECT MATTER

H04W72/04(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, ENTXT, 3GPP, CNKI, IEEE: 资源单元, 时域, 频域, 时频, 资源, 可用, 不可用, 相反, 冲突, 保护带宽, 集合, 子集, resource element, RE, time, frequency, resource, available, unavailable, flexible, opposite, conflict+, PDSCH, PUSCH, Physical channel, set, sub-set

### C. DOCUMENTS CONSIDERED TO BE RELEVANT

| Category* | Citation of document, with indication, where appropriate, of the relevant passages | Relevant to claim No. |
| --- | --- | --- |
| X | CN 111107650 A (GUANGDONG OPPO MOBILE TELECOMMUNICATIONS CORP., LTD.) 05 May 2020 (2020-05-05) <br> description, paragraphs 78-121 and 192-197 | 1-2, 16, 25-29 |
| Y | CN 111107650 A (GUANGDONG OPPO MOBILE COMMUNICATIONS CO., LTD.) 05 May 2020 (2020-05-05) <br> description, paragraphs 78-121 and 192-197 | 3-8, 27 |
| Y | CN 110944387 A (SHANGHAI LANGBO COMMUNICATION TECHNOLOGY CO., LTD.) 31 March 2020 (2020-03-31) <br> claim 3 | 3-8, 27 |
| A | US 2014204807 A1 (SAMSUNG ELECTRONICS CO., LTD.) 24 July 2014 (2014-07-24) <br> entire document | 1-29 |

☐ Further documents are listed in the continuation of Box C.　　☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **07 October 2023** | **09 October 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

| International application No. |
| --- |
| **PCT/CN2023/107715** |

| Patent document cited in search report | | | Publication date (day/month/year) | Patent family member(s) | | | Publication date (day/month/year) |
| --- | --- | --- | --- | --- | --- | --- | --- |
| CN | 111107650 | A | 05 May 2020 | ZA | 201906858 | B | 27 January 2021 |
| | | | | KR | 20210151233 | A | 13 December 2021 |
| | | | | KR | 102475099 | B1 | 07 December 2022 |
| | | | | US | 2020077433 | A1 | 05 March 2020 |
| | | | | US | 11166303 | B2 | 02 November 2021 |
| | | | | JP | 2022091881 | A | 21 June 2022 |
| | | | | CA | 3056687 | A1 | 27 September 2018 |
| | | | | CA | 3056687 | C | 11 January 2022 |
| | | | | KR | 20190127735 | A | 13 November 2019 |
| | | | | KR | 102334787 | B1 | 07 December 2021 |
| | | | | US | 2022070912 | A1 | 03 March 2022 |
| | | | | WO | 2018170656 | A1 | 27 September 2018 |
| | | | | RU | 2736773 | C1 | 20 November 2020 |
| | | | | AU | 2017405700 | A1 | 10 October 2019 |
| | | | | AU | 2017405700 | B2 | 14 July 2022 |
| | | | | BR | 112019019051 | A2 | 22 April 2020 |
| | | | | EP | 3923665 | A1 | 15 December 2021 |
| | | | | EP | 3592063 | A1 | 08 January 2020 |
| | | | | EP | 3592063 | A4 | 11 March 2020 |
| | | | | EP | 3592063 | B1 | 01 September 2021 |
| | | | | MX | 2019011077 | A | 05 November 2019 |
| | | | | ES | 2893859 | T3 | 10 February 2022 |
| | | | | SG | 11201908561 | VA | 30 October 2019 |
| | | | | JP | 2020515145 | A | 21 May 2020 |
| | | | | JP | 7049360 | B2 | 06 April 2022 |
| | | | | PH | 12019502127 | A1 | 06 July 2020 |
| CN | 110944387 | A | 31 March 2020 | None | | | |
| US | 2014204807 | A1 | 24 July 2014 | US | 2021367705 | A1 | 25 November 2021 |
| | | | | EP | 2946502 | A1 | 25 November 2015 |
| | | | | EP | 2946502 | A4 | 17 August 2016 |
| | | | | EP | 2946502 | B1 | 06 November 2019 |
| | | | | KR | 20200083632 | A | 08 July 2020 |
| | | | | KR | 20210034690 | A | 30 March 2021 |
| | | | | KR | 102383759 | B1 | 08 April 2022 |
| | | | | US | 2016352455 | A1 | 01 December 2016 |
| | | | | US | 11101921 | B2 | 24 August 2021 |
| | | | | KR | 20150110650 | A | 02 October 2015 |
| | | | | KR | 102128599 | B1 | 09 July 2020 |
| | | | | AU | 2017272180 | A1 | 21 December 2017 |
| | | | | AU | 2017272180 | B2 | 28 March 2019 |
| | | | | AU | 2017272180 | C1 | 03 October 2019 |
| | | | | WO | 2014112832 | A1 | 24 July 2014 |
| | | | | EP | 3614587 | A1 | 26 February 2020 |
| | | | | JP | 2016509796 | A | 31 March 2016 |
| | | | | JP | 6433919 | B2 | 05 December 2018 |
| | | | | AU | 2014208002 | A1 | 03 September 2015 |
| | | | | AU | 2014208002 | B2 | 14 September 2017 |

Form PCT/ISA/210 (patent family annex) (July 2022)

**EP 4 561 221 A1**

**Patent documents cited in the description**

- CN 202210873501